# EUROPÄISCHE PATENTSCHRIFT

(11) **EP 3 927 942 B1**
(45) Veröffentlichungstag und Bekanntmachung des Hinweises auf die Patenterteilung: **27.09.2023**
(21) Anmeldenummer: 20705148.3
(22) Anmeldetag: 06.02.2020
(51) Int. Cl.: E21D 21/02

(54) **GEBIRGSANKER MIT SENSOR ZUR MESSUNG MECHANISCHER SPANNUNG**
ROCK ANCHOR WITH STRAIN SENSOR
ANCRE DE ROCHE AVEC JAUGE CONTRAINTE

(30) Priorität: 19.02.2019 AT 600392019
(43) Veröffentlichungstag der Anmeldung: 29.12.2021
(73) Patentinhaber: Montanuniversität Leoben, 8700 Leoben (AT)
(72) Erfinder: FEIEL, Susanne, 8700 Leoben (AT); KERN, Wolfgang, 8700 Leoben (AT); GRIESSER, Thomas, 8700 Leoben (AT); MOSER, Peter, 8700 Leoben (AT)
(74) Vertreter: Dilg, Haeusler, Schindelmann Patentanwaltsgesellschaft mbH
(86) Internationale Anmeldenummer: PCT/EP2020/053028
(87) Internationale Veröffentlichungsnummer: WO 2020/169356

(56) Entgegenhaltungen:
- EP-A1- 1 906 161
- WO-A1-2017/219134
- CN-A- 102 720 515
- CN-B- 103 485 811
- CN-U- 203 097 917
- CN-Y- 2 319 568
- CN-Y- 201 010 905
- DE-A1-102007 020 131
- DE-A1-102014 101 241
- NL-C2- 1 006 273
- US-A1- 2014 123 766
- US-A1- 2018 067 003

## Beschreibung

### Technisches Gebiet

Die vorliegende Erfindung betrifft Vorrichtungen zur Befestigung und Verfestigung von Körpern (Stützelemente), insbesondere einen Gebirgsanker, Stützanker, Bewehrungsstab, eine Schraube bzw. einen Bolzen oder einen Dübel, und ein Verfahren zum Befestigen eines Gegenstands an einem Stützelement und ein Verfahren zur Stabilisierung oder Bewehrung eines Stützelementes, wobei die Vorrichtung eine Zustandsüberwachung zum Bestimmen einer Verformung aufweist. Ferner betrifft die vorliegende Erfindung ein Verfahren zum Herstellen einer Vorrichtung.

NL 1006273 C2 offenbart einen Stahlanker mit Dehnungsmeßsensoren. Der Stahlanker weist ein Stahlrohr auf, dass in eine Wand eingebracht werden kann. Hierfür weist der Stahlanker an dem freien Ende einen Bohrabschnitt auf. In das Stahlrohr kann eine Trägerstange mit einer Vielzahl von Dehnungsmeßsensoren eingebracht werden. Daran angeschlossene Kabel können an einem freien Ende des Stahlankers nach außen geführt werden. In das Stahlrohr kann beispielsweise Beton eingefüllt werden, um die Dehnungsmeßsensoren an das Stahlrohr zu fixieren. Anschließend wird über eine Mutter auf eine Druckbox eine Spannung aufgebracht, welche mit den Dehnungsmeßsensoren gemessen wird.

### Hintergrund der Erfindung

Anker und insbesondere Gebirgsanker werden in Bergwerken und im Bauwesen unter und über Tage in großer Anzahl zur Sicherung des Gebirges (Festgestein oder Lockergebirge) und auch von Bauwerken (Stützwänden, Dämme für Taubmaterial, Schlammteiche, etc.) eingesetzt. Anker werden in Bohrlöcher eingeführt und in diesen verankert. Die Verankerung kann durch Vermörtelung oder Verklebung über die Ankerlänge, durch Reibung entlang der Bohrlochwand oder durch mechanische Verankerung im Bohrloch erfolgen. Alternativ kann ein Anker in Lockermaterial oder in halbfestes Material auch eingeschlagen werden. Durch die Ankerung selbst oder Verankerung des Ankers im Gebirge (Festgebirge oder Lockergebirge) oder Bauwerk wird dieses innerlich stabilisiert. Stützanker befestigen z. B. Stützwände am zu stützenden Gebirge.

Anker haben eine stabförmige Form und eine Länge, die an das zu sichernde Objekt (Gebirge, Bauwerk) angepasst ist. Anker können Längen von weniger als einem Meter bis zu 100 m und mehr aufweisen. Geeignete Anker können aus hochfestem Material, typischerweise Stahl aber auch Kunststoffen, Verbundwerkstoffen oder nachwachsenden Rohstoffen wie Holz
und Bambus bestehen. Bewegt sich das Gebirge oder anderes Material, das den Anker umgibt, so übt es Kräfte auf den Anker aus, die mechanische Spannungen in dem Anker induzieren. Der Anker beginnt sich zu verformen. In zu Ankern vergleichbarer Weise wird Bewehrungsstahl während der Betonierungsarbeiten in Beton eingebaut, um diesen höhere Festigkeiten und insbesondere höhere Zugfestigkeiten zu verleihen. Solcherart verfestigter Beton wird als Stahlbeton bezeichnet. Wirken nun Kräfte auf die Stahlbetonstruktur so übertragen sich diese auch auf die eingebaute Bewehrung, die sich zu verformen beginnt.

Ferner entstehen bei der Befestigung von Gegenständen an entsprechenden Stützelementen (Gebirge oder Bauwerke) mittels Vorrichtungen wie Schrauben, Bolzen oder Dübel mechanische Spannungen, wenn die Vorrichtungen in die Stützelemente, beispielsweise mittels Schraubens oder Pressens, eingebracht werden. Diese mechanischen Spannungen führen ebenfalls zu einer Verformung der Vorrichtung.

### Darstellung der Erfindung

Es ist eine Aufgabe der vorliegenden Erfindung, eine Stabilität einer Befestigung zwischen einem Gegenstand und einem Stützelement bzw. eine Verfestigung selbst mit einer Vorrichtung zu überwachen.

Gemäß einem ersten Aspekt der vorliegenden Erfindung wird eine Vorrichtung (zum Beispiel ein Anker, Gebirgsanker, Stützanker, Bewehrungsstange, Schraube oder Dübel) zum Befestigen eines Gegenstands an einem Stützelement (zum Beispiel Gebäude, bzw. Gebäudewand oder Gebirgswand) und/oder zur Stabilisierung bzw. Bewehrung des Stützelements beschrieben, wobei die Vorrichtung eine Zustandsüberwachung zum Bestimmen einer mechanischen Spannung (die insbesondere eine Verformung der Vorrichtung verursacht) aufweist. Die Vorrichtung weist einen Befestigungskörper mit einem Befestigungsabschnitt zum Einbringen in das Stützelement bzw. zum Befestigen des Gegenstands an dem Stützelement und eine Leiterbahn auf, welche elektrisch leitfähig ist und entlang eines bahnförmigen Verlaufs zum Messen von mechanischer Spannung an dem Befestigungsabschnitt aufgetragen ist. Der Befestigungskörper weist einen Kopplungsabschnitt zum Koppeln mit einer Auswerteeinheit auf. Die Leiterbahn ist derart ausgebildet, dass diese von dem Kopplungsabschnitt aus mit elektrischer Energie von der Auswerteeinheit koppelbar ist, wobei der elektrische Widerstand der Leiterbahn indikativ zu der Verformung des Befestigungskörpers in dem Befestigungsabschnitt ist.

Gemäß einem weiteren Aspekt wird ein Verfahren zum Bestimmen einer mechanischen Spannung bzw. Verformung einer oben beschriebenen Vorrichtung zum Befestigen eines Gegenstands an einem Stützelement oder zur Stabilisierung des Stützelements beschrieben. Gemäß dem Verfahren wird ein elektrischer Widerstand der Leiterbahn gemessen, wobei der elektrische Widerstand indikativ zu der mechanischen Spannung bzw. Verformung des Befestigungskörpers in dem Befestigungsabschnitt ist.

Gemäß einem weiteren Aspekt wird ein Verfahren zum Herstellen einer Vorrichtung zum Befestigen eines Gegenstands an einem Stützelement und/oder zur Stabilisierung des Stützelements. Gemäß dem Verfahren wird ein Befestigungskörper mit einem Befestigungsabschnitt zum Einbringen in das Stützelement bereitgestellt. Eine elektrisch leitfähige Leiterbahn wird entlang eines bahnförmigen Verlaufs zum Messen von mechanischer Spannung an dem Befestigungsabschnitt aufgetragen. Der Befestigungskörper weist einen Kopplungsabschnitt zum Koppeln mit einer Auswerteeinheit auf. Die Leiterbahn ist derart ausgebildet, dass diese von dem Kopplungsabschnitt aus mit elektrischer Energie versorgbar ist, wobei der elektrische Widerstand der Leiterbahn indikativ zu der Verformung des Befestigungskörpers in dem Befestigungsabschnitt ist.

Üblicherweise tritt bei Vorrichtungen, welche beispielsweise als Stützanker eine Gebirgswand verstärken oder als Gebirgsanker oder Schraub-/ Bolzenverbindung einen Gegenstand an ein Stützelement Befestigen, mit der Zeit ein Abnehmen der mechanischen Spannung zwischen den Befestigungskomponenten und somit zu einer Lockerung der Befestigung bzw. der Stabilisierung ein. Ferner kann insbesondere bei Bewegung des Stützelements, beispielsweise der Gebirgswand oder der Stützwand eines Gebäudes, die mechanische Spannung zwischen dem Stützelement und dem Befestigungskörper des Befestigungsmittels zunehmen oder abnehmen. Beides führt zu einer Verformung des Befestigungskörpers oder zu einem Bruch, was indikativ für die Qualität und die Stabilität der Befestigung ist.

Die Vorrichtung gemäß der vorliegenden Erfindung weist hierbei eine Zustandsüberwachung der Qualität der Befestigung auf. Dabei weist der Befestigungskörper einen Befestigungsabschnitt auf, welcher insbesondere den Teil des Befestigungskörpers aufweist, der in dem Stützelement teilweise oder vollständig eingebracht ist. Der Befestigungsabschnitt ist somit mittels einer Schraubverbindung, einer stofflichen Verbindung (mittels Kleber oder Zement) oder einer Pressverbindung in einer Öffnung des Stützelements befestigt. Entsprechend kann der Befestigungsabschnitt beispielsweise einen Gewindeabschnitt oder dergleichen aufweisen. Der Befestigungskörper kann ebenfalls in das Stützelement vollständig eingebracht sein, beispielsweise in das Stützelement eingegossen, und der Koppelungsabschnitt kann mit einer signaltechnisch mit der außen liegenden Auswerteeinheit gekoppelt sein.

Ferner weist der Befestigungskörper einen Kopplungsabschnitt auf, welcher beispielsweise im Inneren des Befestigungskörpers ausgebildet ist oder in einem Bereich des Befestigungskörpers ausgebildet ist, welcher im Befestigungszustand aus dem Stützelement herausragt. Der Kopplungsabschnitt weist die Einrichtungen auf, die für die Energieeinspeisung in die Leiterbahn wie auch zum Signalaustausch mit der Umgebung notwendig sind. Insbesondere ist der Kopplungsabschnitt im befestigten Zustand der Vorrichtung von außen zugänglich und/oder einsehbar. Ferner kann der Koppelabschnitt einen Teil des Befestigungskörpers aufweisen, welcher vollständig in dem Stützelement vorliegt und mittels drahtloser Verbindungstechnologie mit der Umgebung des Stützelements koppelbar ist.

Zur Messung der Qualität der Befestigung zwischen der Vorrichtung und dem Stützelement wird an dem Befestigungsabschnitt in einem bahnförmigen Verlauf eine Leiterbahn angeordnet, die mit elektrischer Energie insbesondere von dem Kopplungsabschnitt aus versorgt wird. Unter dem Begriff "Auftragen einer Leiterbahn" wird beispielsweise verstanden, dass die Leiterbahn bereits in einem festen Zustand (entspannt oder gedehnt) auf dem Befestigungsabschnitt aufgetragen (zum Beispiel geklebt) wird. Ferner wird unter dem Betreff "Auftragen einer Leiterbahn" verstanden, dass die Leiterbahn als Halbzeug, beispielsweise in einem flüssigen Zustand, mittels Siebdruckverfahrens, Tiefdruckverfahrens oder mittels Tintenstrahldruckverfahrens auf den Befestigungsabschnitt aufgetragen wird.

Ferner kann auch in den Befestigungsabschnitt selbst eine Energiequelle, wie beispielsweise eine Batterie, vorgesehen werden. Ebenso könnte drahtlos "remote" Energie eingespeist werden im Sinne der RFID Technologie. Die Leiterbahn besteht aus einem elektrisch leitfähigen Material bzw. eine dichte Anordnung von elektrisch leitfähigen Partikeln, wie beispielsweise Kupfer, Aluminium oder Silber. Die Leiterbahnen können basierend auf zunächst flüssigem Metall auf ein (elastomeres) Substrat aufgetragen werden. Das flüssige Metall kann eine (euthektische) Metalllegierungen aufweisen. Galinstan ist eine z. B. eutektische Legierung aus Gallium, Indium und Zinn. Beispielsweise kann die Legierung eine größere Menge Gallium als eine Menge Indium oder Zinn enthalten. Beispielsweise kann die Legierung eine Legierung sein, die 65 bis 86 Gew.-% Gallium, 5 bis 22 Gew .-% Indium und 1 bis 11 Gew .-% Zinn enthält. Ferner können leitfähige Kohlenstoffpartikel, z. B. Nanotubes, oder Ruß verwendet werden. In einer Ausführungsform wird ein Metallvorläufer auf eine Oberfläche des Elastomersubstrats aufgebracht. Der Metallvorläufer kann ein Salz bzw. Salzlösung eines Metalls (z. B. Silber) oder einen Komplex eines Metalls umfassen. In einer Ausführungsform umfasst die feste Metallschicht mindestens ein Element (oder Metall) ausgewählt aus der Gruppe bestehend aus Kupfer, Silber, Gold und Platin. Es werden beispielsweise strukturierte Metallbahnen auf den Befestigungsabschnitt aufgetragen und dann im Tauchbad auf den Metallbahnen Galinstan gebildet. Zudem kann die Leiterbahn aus unten beschriebener leitfähiger Tinte bestehen. Die Leiterbahn kann derart mit elektrischer Energie gespeist werden, dass ein elektrischer Widerstand der Leiterbahn messbar ist.

Die Leiterbahn ist derart auf dem Befestigungsabschnitt fixiert, dass die Leiterbahn entsprechenden Verformungen bzw. Bewegungen des Befestigungsabschnitts folgt. Wird der Befestigungsabschnitt gestaucht, gedehnt oder unterbrochen, verformt sich die Leiterbahn entsprechend. Eine entsprechende Verformung der Leiterbahn führt entsprechend zu einer Änderung des leitfähigen Querschnitts der Leiterbahn und ebenfalls zu einer Veränderung der Dichte der leitfähigen Partikel in der Leiterbahn, sodass entsprechend eine Widerstandsänderung in der Leiterbahn verursacht wird. Entsprechend ist eine Widerstandsänderung der Leiterbahn indikativ zu einer Verformung der Leiterbahn selbst und entsprechend des Befestigungsabschnitts.

Beispielsweise kann nach erstmaliger Befestigung der Vorrichtung an dem Stützelement der Widerstand der Leiterbahn gemessen werden. Der gemessene Widerstand einer entsprechend neuen und intakten Befestigung wird als Sollwert bzw. Ausgangswert zugrunde gelegt. Die Änderung des Widerstands ändert sich mit der Größe der Verformung der Leiterbahn und entsprechend des Befestigungsabschnitts. Letztendlich bildet ein Bruch bzw. eine Trennung des Befestigungsabschnitts und entsprechend der Leiterbahn einer Unterbrechung der Leitfähigkeit der Leiterbahn aus und zeigt somit eine Zerstörung der Befestigung an. In routinemäßigen Kontrollen der Vorrichtung kann somit die Abweichung eines gemessenen Widerstands der Leiterbahn zu dem initialen Sollwert gemessen werden und bei Überschreiten oder Unterschreiten eines bestimmten Grenzwerts bzw. Wertes die Vorrichtung nachjustiert werden oder ausgetauscht werden. Eine Leiterbahn kann robust und kosteneffizient auf einen entsprechenden Befestigungsabschnitt aufgetragen werden, dass mit der vorliegenden Erfindung eine sichere und kostensparende Zustandsüberwachung für Vorrichtungen bereitgestellt wird.

An den Kopplungsabschnitt kann eine Auswerteeinheit lösbar angekoppelt werden oder fixiert werden, um den elektrischen Widerstand der Leiterbahn zu messen. Die Auswerteeinheit kann dabei beispielsweise ein Hinweissignal generieren, das Auskunft über die Qualität der Befestigung bzw. der Vorrichtung gibt. Mit anderen Worten analysiert die Auswerteeinheit die gemessenen Widerstände der Leiterbahn und vergleicht diese mit vorgegebenen Sollwerten der Widerstände. Ändert sich ein Widerstand der Leiterbahn über einen vorgegebenen Grenzwert, so generiert die Auswerteeinheit entsprechende Hinweissignale. Die Auswerteeinheit kann integraler Bestandteil der Vorrichtung selbst sein oder als externe Auswerteeinheit an den Kopplungsabschnitt gekoppelt werden, um die Daten betreffend die Widerstände der Leiterbahn auszulesen.

Die Vorrichtung kann insbesondere einstückig ausgebildet werden, wobei der Kopplungsabschnitt und der Befestigungsabschnitt integral bzw. monolithisch ausgebildet sind. Alternativ kann die Vorrichtung modular ausgebildet sein, sodass der Befestigungsabschnitt und der Kopplungsabschnitt getrennt voneinander ausgebildet sind. Der Befestigungsabschnitt und der Kopplungsabschnitt können beispielsweise lösbar miteinander gekoppelt werden. Beispielsweise verharrt der Befestigungsabschnitt in dem Stützelement und ausschließlich bei Kontrollen wird der Kopplungsabschnitt an dem Befestigungsabschnitt gekoppelt, um den Widerstand der Leiterbahn zu messen.

Gemäß einer weiteren beispielhaften Ausführungsform weist die Leiterbahn ein Trägermaterial auf, in welchem leitfähige Partikel eingebettet sind. Das Trägermaterial besteht beispielsweise aus einem festen oder stark viskosen Material, in welchem leitfähige Partikel in einer bestimmten Dichte bzw. in einer bestimmten Anordnung zueinander vorliegen. Die Dichte der leitfähigen Partikel bestimmt die elektrische Leitfähigkeit und entsprechend auch einen bestimmten Widerstand. Ein entsprechendes Trägermaterial mit leifähigen Partikeln kann als flüssige oder viskose leitfähige Tinte auf den Befestigungsbereich aufgebracht werden.

Unter dem Begriff "leitfähiger Tinte" wird eine Materialkombination verstanden, welche ein Trägermaterial aufweist, in welchem leitfähige Partikel, wie beispielsweise Silber-, Aluminium- oder Kupferpartikel eingebracht sind und in dem Trägermaterial vorliegen. Das Trägermaterial besteht beispielsweise aus einem viskosen Fluid, welches nach dem Auftragen der leitfähigen Tinte beispielsweise ausgehärtet oder verdampft, sodass die Partikel der leitfähigen Tinte selbst auf einer Oberfläche des Befestigungsabschnitts haften.

Gemäß einer weiteren beispielhaften Ausführungsform des Verfahrens wird die Leiterbahn hergestellt aus elektrisch leitfähiger Tinte aufweisend das Trägermaterial, welches gelöste leitfähige Partikel aufweist, aufgetragen. Die elektrisch leitfähige Tinte wird im flüssigen Zustand auf den Befestigungsabschnitt aufgetragen. Das aufgetragene Trägermaterial wird verfestigt, so dass die Anordnung der leitfähigen Partikel in dem Trägermaterial fixiert wird.

Das Trägermaterial kann in der leitfähigen Tinte als flüssiges Monomer, welches später polymerisiert wird, oder als Polymer vorliegen. In dem flüssigen Trägermaterial liegen die leitfähigen Partikeln gelöst oder als Salzlösung (z. B. Silbersalzlösung) vor. Anschließend wird das Trägermaterial z. B. durch Zugabe eines weiteren Binders, mittels thermischer Behandlung und/oder mittels Strahlung (z.B. Licht, UV-Licht) verfestigt und die Dichte bzw. die Anordnung der leitfähigen Partikel in dem Trägermaterial fixiert. Wie weiter unten detaillierter beschrieben, kann die leitfähigen Tinte effizient in technisch einfacher Art und Weise auf dem Befestigungsabschnitt aufgetragen werden, wobei beliebige Verläufe der Leiterbahn möglich sind. In der leitfähigen Tinte sind die leitenden Partikel derart dicht gepackt, dass eine konstante elektrische Leitfähigkeit zwischen den Partikeln vorliegt. Bei Verformung (Dehnung, Einschnürung oder Stauchung) der Leiterbahn werden die leitfähigen Partikel bereichsweise Dichter gepackt oder weniger dicht gepackt, wodurch entsprechend der elektrische Widerstand beeinflusst wird. Basierend auf diesem geänderten elektrischen Widerstand kann auf die Art und Größe der Verformung des Befestigungsabschnitts geschlossen werden.

Die aus z. B. leitfähiger Tinte hergestellte Leiterbahn kann aus einem leitfähigem Verbundmaterial bestehen, bei dem ein polymerer Teil (Trägermaterial), z. B. aus Kunstharz, für die Dehnbarkeit verantwortlich ist, während, z. B. perkolierte, leitfähige Füllstoffe/Partikel einen effizienten Ladungstransfer ermöglichen. Leitfähige Füllstoffe können auf Kohlenstoffbasis (z. B. Graphit, amorpher Kohlenstoff, Kohlenstoffnanoröhren (CNTs), Graphen, pyrolysierte Bakteriencellulose) oder metallisch (z. B. Metallnanodrähte, Mikroflocken, Mikropulver, Mikroflower und Nanopartikel) sein.

Die leitfähige Tinte, die eine Quelle für Übergangsmetallionen, ein Reduktionsmittel und/oder eine reduzierende Verbindung bereitstellt, und ein gelöstes Polymer oder einen polymerisierbaren Polymervorläufer, insbesondere ein Monomer, können bei thermischer Behandlung in situ durch Reduktion der Übergangsmetallionen und einer Polymerisationsreaktion (im Falle eines polymerisierbaren Polymervorläufers) zur Bildung eines perkolierten Netzwerks aus Metall-Nano- oder Mikrostruktur oder eingebetteten Metall-Nanopartikeln (insbesondere homogen dispergiert) in einer Polymermatrix (eines zuvor gelösten Polymers oder im Falle eines polymerisierbaren Polymervorläufers des bei der Polymerisation gebildeten Polymers) führen. Der Raum zwischen den metallischen Strukturen (Partikel) kann durch das Polymer ausgefüllt werden und zur Bildung eines Polymernetzwerks beitragen, das diese metallischen Strukturen miteinander verbindet ("verklebt"). In ähnlicher Weise kann es im Fall eines gelösten Polymers auch den Raum zwischen diesen metallischen Strukturen ausfüllen. Hierdurch kann ein Verbundwerkstoff erhalten werden, der auch als "in situ Nanocomposite" (ISNC) bezeichnet werden kann, der eine elektrische Leitfähigkeit (im Hinblick auf die metallische Struktur oder Nanopartikel) sowie eine Verformbarkeit wie Elastizität aufweist. Flexibilität, Dehnbarkeit oder Plastizität (im Hinblick auf die Polymermatrix) und die somit auch als plastischer oder elastischer Leiter bezeichnet werden können. Die elektrische Leitfähigkeit der so erhaltenen ISNCs auch bei hohen Dehnungswerten kann erhalten bleiben (zum Beispiel kann sie mit einem sehr niedrigen relativen Widerstandsverhältnis, definiert als R / R0, bis zu 200% dehnbar sein, wobei R und R0 sind die Widerstandswerte bei einem gegebenen Dehnungsgrad bzw. der Widerstand bei 0% Dehnung), nehmen jedoch während des Dehnungsprozesses monoton ab. Nach der Freisetzung kann die Leitfähigkeit auf den ursprünglichen Wert zurückkehren, und nach mehreren Streck- und Freisetzungszyklen wird nur eine geringe Änderung verursacht. Außerdem kann die leitfähige Tinte nach der thermischen Behandlung fest an der Oberfläche des verformbaren Substrats haften.

Die Metallpartikel (z.B. Silberpartikel) werden somit in einer elastomere Matrix des Trägermaterials gehalten und werden bei Stauchung oder Dehnung entsprechend mehr oder weniger beabstandet, sodass der Widerstand beeinflusst wird. Ferner spielt die Verringerung der Bandbreite bei Dehnung eine Rolle bei der Widerstandsänderung.

Die Leiterbahn und insbesondere die Leiterbahn aus leitfähiger Tinte kann mit einer Dicke von 1 µm bis 100 µm (Mikrometer) aufgetragen werden. Die leitfähige Tinte kann einfach aufgebracht werden und weist eine hohe Sensitivität auf. Insbesondere kann die Leiterbahn über einen Teilbereich des Befestigungsabschnitts aufgetragen werden oder über den gesamten Befestigungsabschnitt.

Gemäß einer weiteren beispielhaften Ausführungsform ragt der bahnförmige Verlauf der Leiterbahn derart in den Kopplungsabschnitt hinein, dass eine elektrische Leitfähigkeit zwischen der Leiterbahn in dem Kopplungsabschnitt und dem Befestigungsabschnitt vorliegt. Somit kann von dem Kopplungsabschnitt aus die Leiterbahn mit Energie versorgt werden und eine entsprechende Widerstandsänderung abgelesen werden.

Gemäß einer weiteren beispielhaften Ausführungsform bildet die Leiterbahn in dem Kopplungsabschnitt zumindest zwei elektrische Kontakte aus, wobei der bahnförmige Verlauf der Leiterbahn von einem der elektrischen Kontakte über den Befestigungsabschnitt zu dem anderen elektrischen Kontakt verläuft. Die Leiterbahn verläuft somit in Schleifenform von einem Ende des Befestigungsabschnitts, an welchen der Kopplungsabschnitt gekoppelt ist und der erste elektrische Kontakt vorliegt, zu einem gegenüberliegenden Ende des Befestigungsabschnitts und wieder zurück zu dem zweiten elektrischen Kontakt. Somit kann zentral eine Spannungsquelle von dem Kopplungsabschnitt die erforderliche elektrische Energie zur Widerstandsmessung einspeisen.

Gemäß einer weiteren beispielhaften Ausführungsform verläuft der bahnförmige Verlauf der Leiterbahn in dem Befestigungsabschnitt zumindest teilweise mäanderförmig. Somit kann ein großer Teil der Oberfläche des Befestigungsabschnitts mit der Leiterbahn abgedeckt werden, sodass die Wahrscheinlichkeit zur Messung lokaler Deformationen erhöht wird. Zudem wird die Sensitivität der Leiterbahn erhöht.
Gemäß einer weiteren beispielhaften Ausführungsform beträgt die Breite des bahnförmigen Verlaufs insbesondere zwischen 20 µm (Mikrometer) und 2500 µm, insbesondere zwischen 25 µm und 2000 µm beträgt.

Gemäß einer weiteren beispielhaften Ausführungsform weisen zumindest zwei Bahnabschnitte des bahnförmigen Verlaufs der Leiterbahn unterschiedliche Bahnbreiten zueinander auf. Insbesondere kann die Leiterbahn eine oder eine Vielzahl von Einschnürungen bzw. Verjüngungen an bestimmten Stellen des Befestigungsabschnitts aufweisen. Unter Kenntnis des Vorliegens der Position der Verjüngungen kann exakt der Ort der Verformung bei einer bestimmten Widerstandsänderung bestimmt werden. Durch die Lokalität der Verjüngungen kann die Vorzugsrichtung der verjüngten Widerstandsbahnen der Leiterbahn und dadurch die Richtungsabhängigkeit der Sensitivität bestimmt werden.

Gemäß einer weiteren beispielhaften Ausführungsform ist zwischen der Oberfläche des Befestigungsabschnitts und der Leiterbahn eine elektrisch isolierende Isolierschicht angeordnet. Die Isolierschicht weist insbesondere ein polymeres Substrat, insbesondere eine Thermoplastfolie und/oder Elastomerfolie auf. Somit können Störungen bei den Widerstandsmessungen basierend auf elektrischen Strömen zwischen der Leiterbahn und dem Befestigungsabschnitt reduziert werden. Die Schichtdicke der Isolierschicht kann beispielsweise zwischen 1 µm (Mikrometer) bis 10000 µm, insbesondere 15 µm bis 5000 µm, betragen.

Das Material des Elastomersubstrats ist elastisch (oder flexibel) und kann eine feste Metallschicht (oder die später gebildete Legierung) auf seiner Oberfläche tragen. Beispielsweise kann das Material des Elastomersubstrats mindestens ein Polymermaterial umfassen. Geeignete Beispiele für das Material des Elastomersubstrats können insbesondere Thermoplaste, Duroplaste und Verbundmaterialien sein. Insbesondere umfassen geeignete Beispiele für das Material des Elastomersubstrats Polyurethane, Polyurethan (meth) acrylate, PEG- (meth) acrylate; Polyester wie Polyethylenterephthalat (PET), Polyethylennaphthalat (PEN), Polycarbonat (PC); Polysulfone wie Polyethersulfon (PES); Polyarylate (PAR); polycyclische Olefine (PCO); Polyimide (PI); Polyolefine wie Polyethylen (PE), Polypropylen (PP); Vinylpolymere wie Polystyrol (PS), Polyvinylchlorid (PVC), Polymethylmethacrylat (PMMA); Polyamide; Polyether; Polyketone wie aromatische Polyetherketone (z. B. PEEK); Polysulfide (z. B. PPS); Fluorpolymere wie Polyvinylidenfluorid (P (VDF) wie P (VDF-TrFE), die besonders geeignet sein können, wenn sie für einen piezoelektrischen Sensor verwendet werden), Polytetrafluorethylen (wie PTFE), fluoriertes Ethylenpropylen (FEP); Flüssigkristallpolymere; Polyepoxide; Polysiloxane (z. B. PDMS); Kautschukmaterialien wie Naturkautschuk (NR), synthetischer Naturkautschuk (IR), Nitrilbutadienkautschuk (NBR), carboxylierter Nitrilbutadienkautschuk (XNBR), Styrolbutadienkautschuk (SBR) und andere Kautschukmaterialien aus Polymerdispersionen und Kautschuk oder synthetische Kautschuklatices; Biopolymere oder Kombinationen, Copolymere und / oder Gemische davon. Insbesondere kann das Material des Elastomersubstrats ein thermoplastisches Polyurethan umfassen.

Das Elastomersubstrat kann einen Zugmodul von nicht mehr als 250 MPa, insbesondere von nicht mehr als 200 MPa aufweisen. Die Untergrenze des Zugmoduls des Elastomersubstrats ist nicht besonders beschränkt, solange das Elastomersubstrat eine feste Metallschicht (oder die später gebildete Legierung) auf seiner Oberfläche tragen kann. Insbesondere kann das Elastomersubstrat einen Zugmodul von nicht weniger als 25 MPa, insbesondere von nicht weniger als 50 MPa aufweisen. Der Zugmodul des Elastomersubstrats kann beispielsweise gemäß ISO 527-1 und 527-3 bestimmt werden.

Gemäß einer weiteren beispielhaften Ausführungsform ist die Leiterbahn elastisch ausgebildet und die Leiterbahn ist in einem gedehnten und vorgespannten Zustand auf dem Befestigungsabschnitt aufgetragen. Im unverformten Ausgangszustand des Befestigungsabschnitts liegt die elastische Leiterbahn somit gedehnt und unter Vorspannung vor. Somit sind die leitfähigen Partikel der Leiterbahn im Ausgangszustand insbesondere weiter voneinander beabstandet und eine elastomere Rückstellungskraft versucht die leitfähigen Partikel zusammen zu ziehen. Wird nun der Befestigungsabschnitt gestaucht, so werden aufgrund der Rückstellungskraft die leitfähigen Partikel der Leiterbahn näher zusammengedrückt. Damit wird die Leitfähigkeit der Leiterbahn erhöht und der elektrische Widerstand entsprechend reduziert. Somit können neben Dehnungen und Brüchen des Befestigungsabschnitts ebenfalls verbessert auch Stauchungen gemessen werden. Wird im Vergleich dazu die Leiterbahn ungedehnt auf dem Befestigungsabschnitt aufgetragen, so müssen bei einer Stauchung die leitfähigen Partikel zusammengedrückt werden. Dies wird jedoch beispielsweise durch eine ungedehnte Matrix, in welcher die leitfähigen Partikel eingebettet sind, erschwert, sodass selbst bei einer starken Stauchung die leitfähigen Partikel nur geringfügig zueinander gedrückt werden.

Die Leiterbahn, welche beispielsweise in einer Matrix als Trägermaterial eingebettete leitfähigen Partikel aufweist, kann vor dem Auftragen auf den Befestigungsabschnitt gedehnt werden und auf ein ungedehntes (elastomere) Substrat bzw. Isolierschicht aufgetragen werden. Ferner kann die Leiterbahn im ungedehnten Zustand auf ein ungedehntes elastomeres Substrat aufgetragen werden. Anschließend kann das Substrat zusammen mit der Leiterbahn gedehnt werden und in diesem gedehnten und vorgespannten Zustand auf den Befestigungsabschnitt aufgetragen werden.

Gemäß einer weiteren beispielhaften Ausführungsform weist der Befestigungsabschnitt eine Nut auf, in welcher die Leiterbahn angeordnet ist. Mit anderen Worten ist die Leiterbahn nicht direkt auf der äußersten Oberfläche des Befestigungsabschnitts angeordnet, sondern in einer inneren Oberfläche des Befestigungsabschnitts innerhalb der Nut. Dabei kann die Leiterbahn an Seitenwänden der Nut oder an der Bodenfläche der Nut befestigt werden. Somit kann die Leiterbahn vor äußeren Einflüssen geschützt werden.

In einer weiteren beispielhaften Ausgestaltung weist die Nut insbesondere einen Hinterschnitt auf, wobei die Leiterbahn einer inneren Oberfläche des Hinterschnitts angeordnet ist.

Gemäß einer weiteren beispielhaften Ausführungsform ist die Nut mit einem Versiegelungsmaterial gefüllt, wobei das Versiegelungsmaterial insbesondere Silikon, Polyurethan und/oder Acrylatharz aufweist. Somit wird der Schutz der Leiterbahn vor äußeren Einflüssen erhöht.

Gemäß einer weiteren beispielhaften Ausführungsform ist im Kopplungsabschnitt eine Steuerschaltung zum Steuern eines Stroms in der Leiterbahn angeordnet ist. Die Steuerschaltung kann ferner Teil der Auswerteeinheit sein. Die Steuerschaltung steuert insbesondere den elektrischen Energieeintrag in die Leiterbahn. Ferner kann mittels der Steuerschaltung beispielsweise die elektrische Energie konstant oder pulsartig in die Leiterbahn eingebracht werden. Ferner kann die Steuerschaltung Gleichstrom oder Wechselstrom in vorbestimmten Frequenzen in die Leiterbahn einspeisen.

Die Steuerschaltung kann in den Kopplungsabschnitt integriert werden oder lösbar befestigt werden. Die Steuerschaltung kann beispielsweise elektronische Bauteile, wie beispielsweise Relais oder Prozessoren aufweisen.

Gemäß einer weiteren beispielhaften Ausführungsform ist
dabei die Steuerschaltung in dem Kopplungsabschnitt auf dessen Oberfläche aufgedruckt. Ferner kann die Steuerschaltung auf einem flexiblen Substrat, wie beispielsweise einer selbstklebenden Folie befestigt bzw. aufgedruckt werden, wobei die selbstklebende Folie in dem Koppelbereich befestigt werden kann.

Gemäß einer weiteren beispielhaften Ausführungsform weist die Steuerschaltung ein Funkmodul zum Senden von Signalen betreffend den Widerstand der Leiterbahn zu einer beanstandeten externen Auswerteeinheit auf. Das Funkmodul ist insbesondere ausgebildet, die Signale drahtlos an eine Auswerteeinheit zu übermitteln. Insbesondere kann das Funkmodul ein Bluetooth Modul, ein Induktionsmodul oder ein RFID Modul ausbilden, um die Signale zu übertragen.

Gemäß einer weiteren beispielhaften Ausführungsform weist der Befestigungskörper im Kopplungsabschnitt ein Schnittstellenelement für eine Energiequelle und/oder für eine externe Auswerteeinheit auf. Das Schnittstellenelement weist insbesondere eine USB-Buchse, eine Induktionsschleife oder eine RFID Schnittstelle aufweist. So kann beispielsweise Energie für die Leiterbahn induktiv von außen in den Kopplungsabschnitt eingetragen werden. Ferner können die gemessenen Signale betreffend den Widerstand der Leiterbahn über RFID-Module übertragen werden. Ebenfalls kann wie oben beschrieben ein Funkmodul vorgesehen werden, um entsprechende Signale über beispielsweise Bluetooth oder andere drahtlose Verbindungstechnologien zu übertragen. Ferner kann der Schnittstellenelement neben einer drahtlosen Signalübertragung ebenfalls Vorrichtungen für eine drahtgebundene Signalübertragung aufweisen. So kann das Schnittstellenelement beispielsweise einen USB-Anschluss, einen seriellen Anschluss oder einen Lichtleiteranschluss ausbilden.

Die externe Auswerteeinheit kann beispielsweise eine mobile Auswerteeinheit darstellen, wie beispielsweise eine mobile Computereinheit, z.B. ein Tablet-Computer oder ein Smartphone. Die entsprechenden Signale betreffend die Widerstände der Leiterbahn bzw. deren Widerstandsänderung können wie oben beschrieben drahtlos übertragen werden. Ferner kann zudem über standardisierte Schnittstellen eine drahtgebundene Verbindung zu der mobilen Auswerteeinheit hergestellt werden. Ferner können die entsprechenden Signale auch an eine Kontrollzentrale übermittelt werden, welche zentral in Echtzeit die Zustände einzelner Vorrichtungen überwachen kann. Entsprechend kann in einfacher Art und Weise schnell der Zustand von Vorrichtungen ausgelesen und kontrolliert werden.

Gemäß einer weiteren beispielhaften Ausführungsform ist in dem Kopplungsabschnitt eine Auswerteeinheit angeordnet, welche konfiguriert ist, Widerstandsänderungen der Leiterbahn zu messen. In dieser beispielhaften Ausführungsform ist die Auswerteeinheit in dem Kopplungsabschnitt integriert. Die Auswerteeinheit erhält die Signale der entsprechenden Widerstände der Leiterbahn und bestimmt, ob die Abweichung des elektrischen Widerstands in der Leiterbahn sich innerhalb der Grenzwerte befindet oder einen gewissen Grenzwert überschreitet. Die Auswerteeinheit kann anschließend die ausgewerteten Daten betreffend die Widerstandänderung der Leiterbahn an eine Kontroll- bzw. Überwachungsvorrichtung weitergeben.

Gemäß einer weiteren beispielhaften Ausführungsform weist die Auswerteeinheit ein Signalelement auf, wobei das Signalelement konfiguriert ist, basierend auf einer festgestellten Widerstandsänderung ein Hinweissignal, insbesondere ein visuelles oder akustisches Hinweissignal, auszugeben. Das Signalelement kann beispielsweise ein tongebender Lautsprecher oder ein optisches Element, wie beispielsweise eine LED, darstellen, um den Zustand der Vorrichtung wiederzugeben. Stellt die Auswerteeinheit beispielsweise fest, dass bestimmte Grenzwerte der Widerstandsänderung der Leiterbahn überschritten sind, so kann ein Alarmsignal als Hinweissignal akustisch ausgegeben werden. Ferner kann beispielsweise bei Vorliegen einer Widerstandsänderung der Leiterbahn innerhalb der Grenzwerte eine bestimmte Lichtfarbe als Hinweissignal ausgegeben werden. Beispielsweise kann eine LED in diesem Fall grün aufleuchten. Wird ein Grenzwert der Widerstandänderung überschritten, so wird die Lichtfarbe angepasst, indem beispielsweise eine LED ein rotes Licht gemäß einer weiteren beispielhaften Ausführungsform weist der Befestigungskörper eine Energiequelle, insbesondere eine Batterie, zum Einspeisen elektrischer Energie in die Leiterbahn auf. Die Energiequelle kann insbesondere aufladbar sein, indem beispielsweise zusätzliche Photovoltaikelemente vorgesehen sind. Alternativ kann eine entsprechende Energiequelle zusammen mit einer externen Auswerteeinheit an den Kopplungsabschnitt gekoppelt werden, um dann die Leiterbahn mit elektrischer Energie zu versorgen.

Gemäß einer weiteren beispielhaften Ausführungsform ist der Befestigungskörper zumindest teilweise mit einer Schutzschicht, insbesondere bestehend aus einem Verkapselungsmaterial oder einem Schutzlack, eingekapselt.

Gemäß einer weiteren beispielhaften Ausführungsform ist die Vorrichtung eine Gebirgsankervorrichtung und der Befestigungskörper als Gebirgsanker derart ausgebildet, dass mittels des Befestigungsabschnitts der Gegenstand, insbesondere ein Tübbing, an dem Stützelement, insbesondere einer Gebirgswand oder Stützwand, befestigbar ist. Ferner kann der Befestigungskörpers als Stützanker ausgebildet sein, um das Stützelement, beispielsweise eine Gebirgswand, zu stabilisieren. Der Befestigungsabschnitt wird dabei in ein Bohrloch des Stützelements eingesteckt und mittels einer Presseverbindung oder einer stofflichen Verbindung, beispielsweise mittels Mörtel oder Harz fixiert. An dem Gebirgsanker kann beispielsweise ein zu befestigen der Gegenstand, wie beispielsweise eine Tunnelverkleidung bzw. ein Tübbing, fixiert sein. Der Kopplungsabschnitt kann von außen einsehbar und zugänglich sein und/oder auch verborgen und signaltechnisch auslesbar sein, sodass mittels einer Auswerteeinheit die Änderungen des elektrischen Widerstands der Leiterbahn entlang des Befestigungsabschnitts ausgewertet werden können.

Gemäß einer weiteren beispielhaften Ausführungsform ist der Befestigungskörper als Stützanker derart ausgebildet, dass
der Befestigungsabschnitt zum Stabilisieren des Stützelements, insbesondere einer Gebirgswand oder Stützwand, in diesem eingebracht ist. Das Eintreiben eines Stützankers oder das Einbringen eines Stützankers in ein Bohrloch mit folgendem Verkleben oder Vermörteln in eine Gebirgswand oder eine sonstige Stützwand führt zu einer Verfestigung und zu einem Rückhalt. Mit dem erfindungsgemäßen Stützanker besteht nunmehr die Möglichkeit, zum Beispiel Bewegungen der Gebirgswand festzustellen und somit frühzeitig eine Instabilität derselben festzustellen.

Gemäß einer weiteren beispielhaften Ausführungsform ist der Befestigungskörper als Bewehrungsstange derart ausgebildet, dass mittels des Befestigungsabschnitts das Stützelement, insbesondere ein Betonelement, stabilisierbar ist. Die Bewehrungsstange kann beispielsweise eine Stange aus Metall, insbesondere Stahl (Bewehrungsstahl, Armierungseisen), oder eine Stange aus fester Faser, insbesondere Karbonfasermaterial, darstellen und in einem Hybridwerkstoff zum Einsatz kommen. Beispielsweise kann die Bewehrungsstange in einer Betonmasse zum Bilden von Stahlbeton eingesetzt werden. Hierfür können beispielsweise alle oder nur einige Bewehrungsstangen gemäß der vorliegenden Erfindung ausgebildet werden und in einem Bauwerk, wie beispielsweise einem Hochhaus oder einer Brücke, platziert werden. Anschließend kann entsprechend Beton die Bewehrungsstangen umgießen. Während der Lebenszeit des Bauwerks können die elektrischen Widerstände der erfindungsgemäßen Bewehrungsstangen ausgelesen werden, sodass darauf auf den bautechnischen Zustand des Stahlbetons geschlossen werden kann. Somit kann eine Echtzeit Überwachung des Zustands eines Bauwerks umgesetzt werden. Dabei können die Daten betreffend die elektrischen Widerstände der Bewehrungsstangen kontinuierlich oder in bestimmten Kontrollperioden abgelesen werden. Aufgrund der Vielzahl von verwendeten Bewehrungsstangen in einem Bauwerk, können somit eine Vielzahl von Messpunkten an verschiedensten Messpunkten (beispielsweise über 1000 Messpunkte) in einem Bauwerk generiert werden, sodass eine exakte Zustandsüberwachung des Bauwerks möglich ist.

Die Bewehrungsstange weist entsprechend einen Befestigungsabschnitt auf, welcher von der Baumasse bzw. Betonmasse umschlossen wird. Die Leiterbahn ist dabei auf den Befestigungsabschnitt und/oder in einer Nut bzw. einer Öffnung des Befestigungsabschnitts aufgetragen. Ebenfalls kann der Kopplungsabschnitt zum besseren Schutz im Inneren des Befestigungskörpers der Bewehrungsstange ausgebildeten werden. Insbesondere kann das Schnittstellenelement im Kopplungsabschnitt eine Induktionsschleife und/oder eine RFID Schnittstelle aufweisen, um Energie für die Leiterbahn induktiv von außen in den Kopplungsabschnitt einzutragen. Ferner können die gemessenen Signale betreffend den Widerstand der Leiterbahn über das Schnittstellenelement (z. B. aufweisend ein RFID-Modul) drahtlos übertragen werden.

Gemäß einer weiteren beispielhaften Ausführungsform ist die Vorrichtung eine Vorrichtung und der Befestigungskörper als Schraubelement, Bolzenelement oder Dübelelement derart ausgebildet, dass mittels des Befestigungsabschnitts der Gegenstand an dem Stützelement, insbesondere einer Gebäudewand, befestigbar ist.

Das Bolzenelement ist beispielsweise mittels einer Presspassung in das Stützelement, d. h. dem anderen Verbindungspartner, wie beispielsweise einer Gebäudewand, befestigt. Bei Veränderung der Presskraft in der Presspassung, beispielsweise aufgrund einer Verformung des Aufnahmelochs, in welcher das Bolzenelement befestigt ist, ändert sich ebenfalls der elektrische Widerstand in der Leiterbahn, sodass eine Qualität, wie beispielsweise ein Nachlassen der Pressverbindung, gemessen werden kann.

Bei der Vorrichtung als Schraubenelement kann auf der Oberfläche des Befestigungsabschnitts ein Außengewinde vorgesehen werden. Entlang der Längserstreckung des Schraubenelements kann durch die Gewindegänge eine schmale Nut eingefräst werden, in welcher die Leiterbahn vorliegt. Das Schraubenelement kann in einen Verbindungspartner, wie beispielsweise einen Dübel oder ein Bohrloch mit einem entsprechenden Gewinde, eingeschraubt werden. Je nach der Höhe des Drehmoments, mit welcher das Schraubenelement in das Bohrloch eingeschraubt wird, entsteht eine entsprechende Verbindungskraft zwischen den Verbindungspartnern. Dies führt ebenfalls zu einer entsprechenden Verformung des Schraubenelements. Bei einer bestehenden Schraubenverbindung kann ein Nachlassen der Verbindungskraft gemessen werden, da ein entsprechendes Nachlassen der Verbindungskraft zu einer leichten Verformung der Verbindungspartner und entsprechend ebenfalls der Leiterbahn führt, sodass wiederum Widerstandsänderungen zu messen sind. Ferner kann bei Einschrauben eines Schraubenelements überprüft werden, ob ein gewünschtes bzw. vorgegebenes Drehmoment während des Einschraubens des Schraubenelements erzielt worden ist. Da das Aufbringen eines Drehmoments auf ein Schraubenelement zu einer vorbestimmbaren Verformung des Schraubenelements und entsprechend der Leiterbahn führt, wird eine entsprechende Messung der Widerstandsänderung ermöglicht. Neben dem Überwachen einer bestehenden Schraubverbindung kann zudem überprüft werden, ob bei dem Installieren eines Schraubenelements das vorgegebene Drehmoment aufgebracht worden ist.

Wird die Vorrichtung als Dübelelement ausgebildet, kann der innen liegende Teil bzw. als Befestigungsabschnitt und der am äußersten bzw. außen liegende Teil bezüglich eines Bohrlochs als Kopplungsabschnitt definiert werden. An der Innenseite oder an der Außenseite des Dübelelements kann entsprechend die Leiterbahn aufgetragen werden. Hierfür kann das Dübelelement entsprechend schmale Nuten aufweisen, in welchen entsprechende Leiterbahnen vorgesehen sind. Wird nun ein Befestigungsmittel, wie beispielsweise eine Schraube oder ein Bolzen, in den Dübel eingetrieben, so dehnt sich der Befestigungsabschnitt des Dübelelements und entsprechend die Leiterbahn. Dies führt erneut zu einer messbaren Widerstandsänderung, welche Indikativ für die Qualität der Befestigung des Dübels mit dem Befestigungselement ist.

Gemäß einer weiteren beispielhaften Ausführungsform des Verfahrens wird die leitfähige Tinte mittels Siebdruckverfahrens, Tiefdruckverfahren oder mittels Tintenstrahldruckverfahrens auf den Befestigungsabschnitt aufgetragen.

Mittels eines Druckverfahrens, wie beispielsweise mittels Siebdrucks oder Tintenstrahldrucks, wird die leitfähige Tinte auf polymere Substrate, wie beispielsweise Thermoplastfolie oder Elastomerfolie, mit einer Schichtdicke zwischen 1 µm (Mikrometer) und 10000 µm, bevorzugt zwischen 25 µm und 5000 µm aufgebracht. Dabei entsteht eine Leiterbahn als Dehnungssensor, dessen gedruckte Länge auf dem Befestigungsabschnitt (Anker, Schraube oder Dübel) abgestimmt ist. Die Dehnungssensoren verfügen über gedruckte Endkontakte (zur Verbindung mit einer elektronischen Schaltung). Optional wird auch eine geeignete Elektronikschaltung (Auswerteeinheit) zur messtechnischen Erfassung der Widerstandsänderung der Leiterbahn bzw. Dehnungssensoren mit aufgedruckt. Die derart hergestellten Dehnungssensoren werden verkapselt (durch Laminieren oder durch Aufbringung eines Schutzlackes). Die Dehnungssensoren werden sodann in eine in dem Befestigungsabschnitt, z. B. Anker, eingefräste Nut eingeklebt, zum Koppelabschnitt (zum Beispiel dem Ankerkopf oder Schraubenkopf) geführt und an eine Elektronik am Koppelabschnitt angeschlossen.

Ein Versiegelungsmaterial (bevorzugt auf Polymerbasis, beispielsweise Silikon, Polyurethan oder ein Acrylatharz) wird auf den eingeklebten Dehnungssensor (Leiterbahn) zum Schutz aufgebracht und gegebenenfalls zur Härtung gebracht.

Die Herstellung der laminierten Dehnungssensoren (Leiterbahnen) erfolgt auf das Substrat quasi endlos mit den jeweils eingestellten Längen. Die laminierten Dehnungssensoren werden sodann aufgerollt. In einem weiteren Fertigungsschritt werden die Dehnungssensoren abgerollt und in die Ankernut eingeklebt. Entsprechend wird gemäß einer weiteren beispielhaften Ausführungsform des Verfahrens beschrieben, dass die Leiterbahn in einem Substrat vorliegt, wobei das Auftragen einer Leiterbahn entlang des bahnförmigen Verlaufs aufweist ein Aufkleben des Substrats auf dem Befestigungsabschnitt.

Alternativ zum Aufdrucken der elektrisch leitfähigen Tinte auf ein polymeres Substrat und folgendem Laminieren kann in einem ersten Schritt zunächst ein polymeres Substrat direkt auf den Anker aufgebracht werden (z. B. durch Druck, Beschichtung aus flüssiger Phase, oder ein anderes Verfahren), in einem zweiten Schritt sodann die leitende Tinte, in einem dritten Schritt erfolgt die Verkapselung direkt auf dem Anker, in einem vierten Schritt das Aufbringen einer Schutzschicht und in einem fünften Schritt das Anschließen der Elektronik (gedruckt oder elektrotechnisch).

Mit den genannten Druck- und Beschichtungsverfahren können thermische oder durch Strahlung (z. B. mit UV-Licht) initiierte Härtungs- und Vernetzungsschritte verbunden sein.

Im Folgenden wird das Installieren und Betreiben der Vorrichtung als Gebirgsanker beschrieben. Der Anker wird in das Gebirge oder das Bauwerk eingebracht und verankert. Der Anker hat unmittelbar nach dem Verankern einen "Spannungszustand Null". Ist eine Diode am Ankerkopf angeschlossen leuchtet diese grün. Alternativ wird der "Spannungszustand Null" von einer Elektronik drahtlos übertragen.

Beginnt sich das Gebirge bzw. anderwärtiges Material, das den Anker umgibt, zu bewegen und wird der Anker dadurch auf Zug oder Abscherung belastet, so verändert sich der Spannungszustand im Anker im Vergleich zum Spannungszustand "Null". Diese Änderung des Spannungszustandes wirkt auch auf den Dehnungssensor aus leitender Tinte, der in die Ankernut eingeklebt oder auf den Anker direkt aufgedruckt wurde. Die leitende Tinte ändert ihren Widerstand. Diese Widerstandsänderung wird auf die angeschlossene Elektronik übertragen und von dieser entweder über die elektronische Schaltung in Form einer Lichtfarbenänderung am Ankerkopf angezeigt oder als Messwert an ein System drahtlos übertragen. Die Farbänderung wird proportional zur Erhöhung der Spannung im Anker eingestellt.

Reißt oder bricht der Anker, springt der Widerstand des Dehnungssensors auf einen unendlich hohen Wert. Auch dies wird in Form einer Lichtfarbenänderung oder einer blinkenden Lichtquelle oder eines akustischen Signals oder eines andersartigen Signals direkt angezeigt.

Elektrisch leitfähige Tinte für die Herstellung eines Dehnungssensors wird in eine Ankernut aufgebracht oder auf der Anker aufgedruckt. Mit der vorliegenden Erfindung wird erstmalig die Verwendung von elektrisch leitender Tinte auf Ankern zum Zwecke der Messungen der Ankerverformungen und ebenso auch die Art der Applikation und die Anzeige der Dehnung am Ankerkopf beschrieben. Dies umfasst die elektronische Übersetzung der Dehnungsänderung in einen Farbcode und das Auslösen eines akustischen Signals im Falle des Bruches des Ankers. Elastomerbasierte Dehnungssensoren basierend auf leitfähiger Tinte sind gegenüber geringen Dehnungen sehr sensitiv. Dies ist bei der Applikation auf die Vorrichtung bzw. den Anker sehr vorteilhaft. Ein weiterer wesentlicher, disruptiver Vorteil besteht in den geringen Kosten der Applikation von Dehnungssensoren auf Basis leitender Tinte auf Ankern. Die Dehnungssensoren bestehen nur aus einer leitfähigen Linie (leitfähige Tinte), die an bestimmten Stellen Verjüngungen aufweisen kann. Durch die Lokalität der Verjüngungen bzw. die Vorzugsrichtung der verjüngten Widerstandsbahnen kann die Richtungsabhängigkeit der Sensitivität bestimmt werden.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1 eine schematische Darstellung einer Vorrichtung als Gebirgsanker, welche in einer Gebirgswand befestigt ist, gemäß einer beispielhaften Ausführungsform der vorliegenden Erfindung.
Fig. 2 eine schematische Darstellung einer Vorrichtung als Gebirgsanker aus Fig. 1.
Fig. 3 eine schematische Darstellung eines Verlaufs einer Leiterbahn gemäß einer beispielhaften Ausführungsform der vorliegenden Erfindung.
Fig. 4 eine schematische Darstellung eines mäanderförmigen Verlaufs einer Leiterbahn gemäß einer beispielhaften Ausführungsform der vorliegenden Erfindung.
Fig. 5 eine schematische Darstellung einer Leiterbahn umhüllt von einem Substrat gemäß einer beispielhaften Ausführungsform der vorliegenden Erfindung.
Fig. 6 eine schematische Darstellung einer Leiterbahn mit einer Einschnürung gemäß einer beispielhaften Ausführungsform der vorliegenden Erfindung.
Fig. 7 eine schematische Darstellung eines Kopplungsabschnitts mit einem Schnittstellenelement gemäß einer beispielhaften Ausführungsform der vorliegenden Erfindung.
Fig. 8 eine schematische Schnittdarstellung eines Befestigungsabschnitts mit einer Nut gemäß einer beispielhaften Ausführungsform der vorliegenden Erfindung.
Fig. 9 eine schematische Schnittdarstellung eines Kopplungsabschnitts mit einer Nut gemäß einer beispielhaften Ausführungsform der vorliegenden Erfindung.
Fig. 10 eine schematische Schnittdarstellung eines Kopplungsabschnitts mit einer Nut, in welcher eine Auswerteeinheit angeordnet ist, gemäß einer beispielhaften Ausführungsform der vorliegenden Erfindung.
Fig. 11 eine schematische Darstellung einer Vorrichtung als Schraubenvorrichtung gemäß einer beispielhaften Ausführungsform der vorliegenden Erfindung.
Fig. 12 eine schematische Darstellung einer Vorrichtung als Bewehrungsstange gemäß einer beispielhaften Ausführungsform der vorliegenden Erfindung.

### Detaillierte Beschreibung von exemplarischen Ausführunasformen

Gleiche oder ähnliche Komponenten in unterschiedlichen Figuren sind mit gleichen Bezugsziffern versehen. Die Darstellungen in den Figuren sind schematisch.

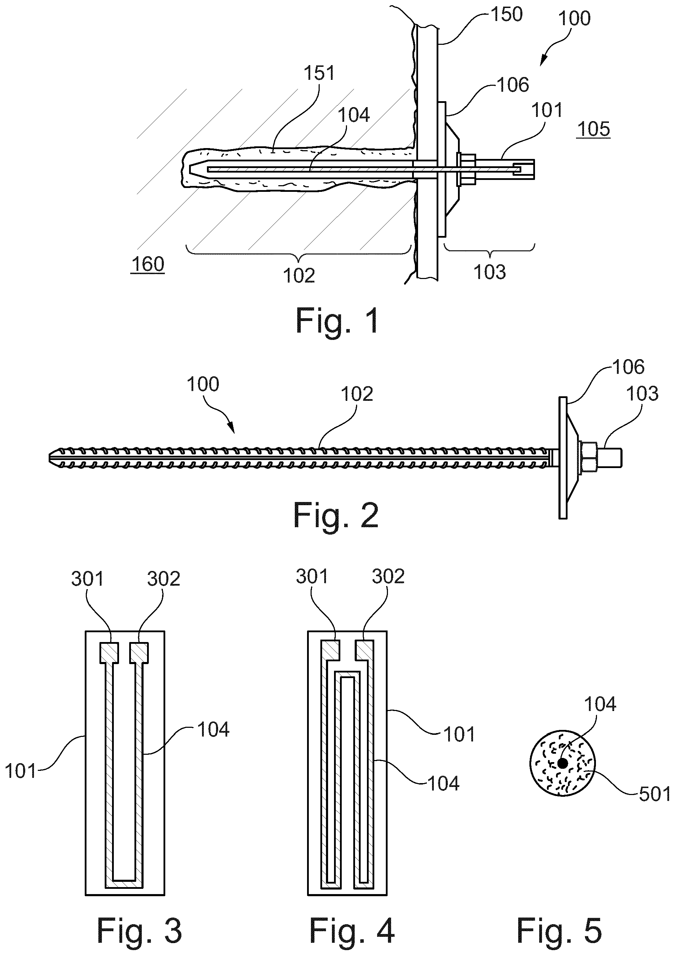

**Fig. 1** und **Fig. 2** zeigen eine Vorrichtung als Gebirgsanker 100, welcher in einer Gebirgswand als Stützelement 160 befestigt ist. Die Vorrichtung 100 verstärkt oder befestigt insbesondere eine Gesteinsoberfläche oder eine mit Gitter oder Spritzbeton versiegelte Gesteinsoberfläche oder einen Tübbing als Gegenstand 150, wobei die Vorrichtung 100 eine Zustandsüberwachung zum Bestimmen einer Verformung aufweist. Die Vorrichtung 100 weist einen Befestigungskörper 101 mit einem Befestigungsabschnitt 102 zum Einbringen in das Stützelement 160 und eine Leiterbahn 104 auf, welche elektrisch leitfähig ist und entlang eines bahnförmigen Verlaufs zum Messen von mechanischer Spannung an dem Befestigungsabschnitt 102 aufgetragen ist. Der Befestigungskörper 101 weist einen Kopplungsabschnitt 103 zum Koppeln mit einer Auswerteeinheit 105 auf.

Die Leiterbahn 104 ist derart ausgebildet, dass diese von dem Kopplungsabschnitt 103 aus mit elektrischer Energie versorgbar ist, wobei der elektrische Widerstand der Leiterbahn 104 indikativ zu der Verformung des Befestigungskörpers 101 in dem Befestigungsabschnitt 102 ist.

Die Vorrichtung weist eine Zustandsüberwachung der Qualität der Befestigung insbesondere zwischen dem Tübbing als zu befestigendem Gegenstand 150 und der Gebirgswand als Stützelement 160 auf. Dabei weist der Befestigungskörper einen Befestigungsabschnitt 102 auf, welcher insbesondere den Teil des Befestigungskörpers 101 aufweist, der in dem Stützelement 160 teilweise oder vollständig eingebracht ist. Der Befestigungsabschnitt 102 ist ferner mit einer stofflichen Verbindung, wie im vorliegenden Fall mittels einer Vermörtelung 151, in einer Öffnung des Stützelements 160 befestigt. Ferner kann die Vorrichtung eine Befestigungsplatte 106 aufweisen, die den Gegenstand 150 gegen das Stützelement 160 drückt.

Ferner weist der Befestigungskörper 101 einen Kopplungsabschnitt 103 auf, welcher in einem Bereich des Befestigungskörpers 101 ausgebildet ist, welcher im Befestigungszustand aus dem Stützelement 160 herausragt. Insbesondere ist der Kopplungsabschnitt 103 im befestigten Zustand der Vorrichtung von außen zugänglich und/oder einsehbar.

Zur Messung der Qualität der Befestigung zwischen der Vorrichtung und dem Stützelement 160 wird an dem Befestigungsabschnitt 102 in einem bahnförmigen Verlauf eine Leiterbahn 104 angeordnet, die mit elektrischer Energie insbesondere von dem Kopplungsabschnitt 102 aus versorgt wird. Die Leiterbahn 104 wird derart mit elektrischer Energie gespeist werden, dass ein elektrischer Widerstand der Leiterbahn 104 messbar ist.

Die Leiterbahnen 104 ist derart auf den Befestigungsabschnitt fixiert, dass die Leiterbahn entsprechenden Verformungen bzw. Bewegungen des Befestigungsabschnitts 102 folgt. Wird der Befestigungsabschnitt 102 gestaucht, gedehnt oder unterbrochen, verformt sich die Leiterbahn 104 entsprechend. Eine Widerstandsänderung der Leiterbahn 104 ist indikativ zu einer Verformung der Leiterbahn 104 selbst und entsprechend des Befestigungsabschnitts 103.

Beispielsweise kann nach erstmaliger Befestigung der Vorrichtung an dem Stützelement 160 der Widerstand der Leiterbahn 104 gemessen werden. Der gemessene Widerstand einer entsprechend neuen und intakten Befestigung wird als Sollwert bzw. Ausgangswert zugrunde gelegt. Die Änderung des Widerstands ändert sich mit der Größe der Verformung der Leiterbahn 100 und entsprechend des Befestigungsabschnitts 102. Letztendlich bildet ein Bruch bzw. eine Trennung des Befestigungsabschnitts und entsprechend der Leiterbahn 104 einer Unterbrechung der Leitfähigkeit der Leiterbahn 104 aus und zeigt somit eine Zerstörung der Befestigung an.

An den Kopplungsabschnitt 103 kann eine Auswerteeinheit 105 lösbar angekoppelt werden oder fixiert werden, um den elektrischen Widerstand der Leiterbahn zu messen und auszuwerten. Die Auswerteeinheit 105 kann dabei beispielsweise ein Hinweissignal generieren, das Auskunft über die Qualität der Befestigung bzw. der Vorrichtung gibt.

Die Vorrichtung, wie im vorliegenden Beispiel als Anker Beziehung weise Gebirgsankervorrichtung 100 dargestellt, kann insbesondere einstückig ausgebildet werden, wobei der Kopplungsabschnitt 103 und der Befestigungsabschnitt 102 integral bzw. monolithisch ausgebildet sind. Alternativ kann die Vorrichtung modular ausgebildet sein, sodass der Befestigungsabschnitt 102 und der Kopplungsabschnitt 103 getrennt voneinander ausgebildet sind. Der Befestigungsabschnitt 102 und der Kopplungsabschnitt können beispielsweise lösbar miteinander gekoppelt werden. Beispielsweise verharrt der Befestigungsabschnitt 102 in dem Stützelement 160 und ausschließlich bei Kontrollen wird der Kopplungsabschnitt 103 an dem Befestigungsabschnitt 102 gekoppelt, um den Widerstand der Leiterbahn 104 zu messen. Die Leiterbahn 104 ist insbesondere aus leitfähiger Tinte ausgebildet.

Wie in dem Ausführungsbeispiel in Fig. 1 dargestellt, ragt der bahnförmige Verlauf der Leiterbahn 104 derart in den Kopplungsabschnitt 102 hinein, dass eine elektrische Leitfähigkeit zwischen der Leiterbahn 104 in dem Kopplungsabschnitt 103 und dem Befestigungsabschnitt 102 vorliegt. Somit kann von dem Kopplungsabschnitt 103 aus die Leiterbahn 104 mit Energie versorgt werden und eine entsprechende Widerstandsänderung abgelesen werden.

Der Befestigungskörper 102 ist zumindest teilweise mit einer Schutzschicht, insbesondere bestehend aus einem Verkapselungsmaterial oder einem Schutzlack, eingekapselt.

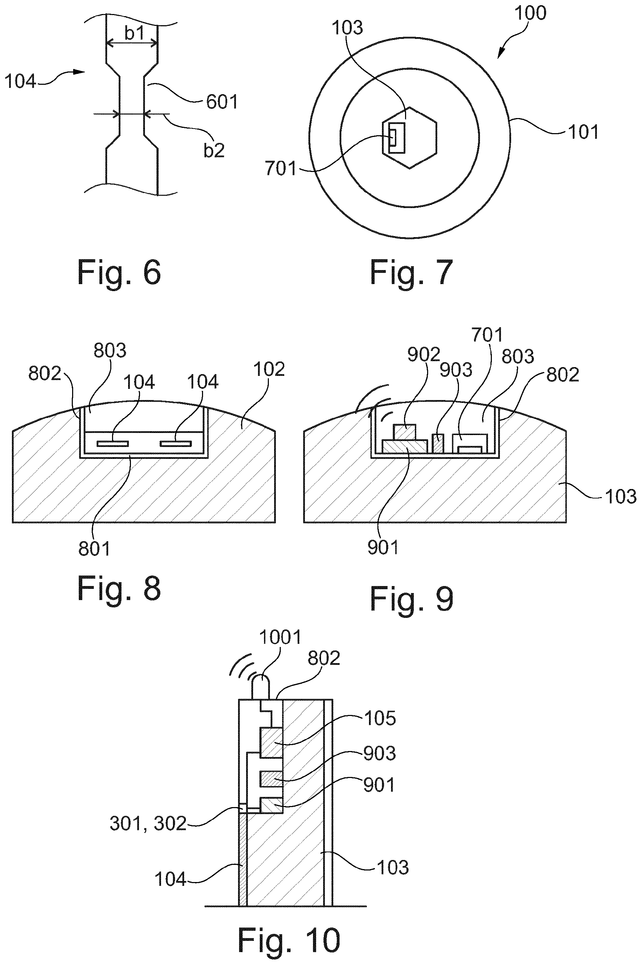

**Fig. 3** zeigt eine schematische Darstellung eines Verlaufs einer Leiterbahn 104. Die 104 Leiterbahn in dem Kopplungsabschnitt bildet zumindest zwei elektrische Kontakte 301, 302 aus, wobei der bahnförmige Verlauf der Leiterbahn 104 von einem der elektrischen Kontakte 301 über den Befestigungsabschnitt zu dem anderen elektrischen Kontakt 302 verläuft. Die Leiterbahn 104 verläuft somit in Schleifenform von einem Ende des Befestigungsabschnitts 102, an welchen der Kopplungsabschnitt 103 gekoppelt ist und der erste elektrische Kontakt 301 vorliegt, zu einem gegenüberliegenden Ende des Befestigungsabschnitts 102 und wieder zurück zu dem zweiten elektrischen Kontakt 302. Somit kann zentral eine Spannungsquelle bzw. Steuerschaltung 901 (siehe Fig. 9) von dem Kopplungsabschnitt 103 die erforderliche elektrische Energie zur Widerstandsmessung einspeisen.

**Fig. 4** eine schematische Darstellung eines mäanderförmigen Verlaufs einer Leiterbahn 104 zwischen den Kontakten 301, 302. gemäß einer beispielhaften Ausführungsform der vorliegenden Erfindung. Somit kann ein großer Teil der Oberfläche des Befestigungsabschnitts 102 mit der Leiterbahn 104 abgedeckt werden, sodass die Wahrscheinlichkeit zur Messung lokaler Deformationen erhöht wird.

Insbesondere auf Basis aus leitender Tinte gedruckten Dehnungssensoren (Leiterbahnen 104) können entsprechend sowohl linienartig (siehe Fig. 3) als auch mäanderartig (siehe Fig. 4) aufgebracht werden.

Die Breite des bahnförmigen Verlaufs einer Leiterbahn 104 kann insbesondere zwischen 20 µm (Mikrometer) und 2500 µm, insbesondere zwischen 25 µm und 2000 µm betragen.

**Fig. 5** zeigt eine schematische Darstellung einer Leiterbahn 104 in einem Substrat 501 gemäß einer beispielhaften Ausführungsform der vorliegenden Erfindung. Das Auftragen einer Leiterbahn 104 entlang des bahnförmigen Verlaufs kann mittels Aufklebens des Substrats 501 auf dem Befestigungsabschnitt 102 erfolgen.

**Fig. 6** zeigt eine schematische Darstellung einer Leiterbahn 104 mit einer Einschnürung bzw. Verjüngung 601. Zumindest zwei Bahnabschnitte des bahnförmigen Verlaufs der Leiterbahn 104 weisen unterschiedliche Bahnbreiten b1, b2 zueinander auf. Insbesondere kann die Leiterbahn eine oder eine Vielzahl von Einschnürungen bzw. Verjüngungen 601 an bestimmten Stellen des Befestigungsabschnitts 103 aufweisen. Unter Kenntnis des Vorliegens der Position der Verjüngung 601 kann exakt der Ort der Verformung bei einer bestimmten Widerstandsänderung bestimmt werden. Durch die Lokalität der Verjüngungen kann die Vorzugsrichtung der verjüngten Widerstandsbahnen der Leiterbahn und dadurch die Richtungsabhängigkeit der Sensitivität bestimmt werden.

**Fig. 7** zeigt eine schematische Darstellung eines Kopplungsabschnitts 103 mit einem Schnittstellenelement 701. Das Schnittstellenelement 701 ist konfiguriert für eine Kopplung einer Energiequelle und/oder für eine Auswerteeinheit 105. Das Schnittstellenelement weist insbesondere eine USB-Buchse, eine Induktionsschleife oder eine RFID Schnittstelle aufweist. So kann beispielsweise Energie für die Leiterbahn 104 induktiv von außen in den Kopplungsabschnitt 103 eingetragen werden. Ferner können die gemessenen Signale betreffend den Widerstand der Leiterbahn über das Schnittstellenelement (z. B. aufweisend ein RFID-Modul) übertragen werden.

**Fig. 8** zeigt eine schematische Schnittdarstellung eines Befestigungsabschnitts 102 mit einer Nut 802. In der Nut 802 ist die Leiterbahn 104 angeordnet. Dabei kann die Leiterbahn an Seitenwänden der Nut 802 oder an der Bodenfläche der Nut 802 befestigt werden. Somit kann die Leiterbahn 104 vor äußeren Einflüssen geschützt werden.

Zwischen der Oberfläche des Befestigungsabschnitts 102 und der Leiterbahn 104 ist eine elektrisch isolierende Isolierschicht 801 angeordnet. Die Schichtdicke der Isolierschicht 801 kann beispielsweise zwischen 1 µm (Mikrometer) bis 10000 µm, insbesondere 15 µm bis 5000 µm, betragen.

Die Nut 802 ist ferner mit einem Versiegelungsmaterial 803 gefüllt, wobei das Versiegelungsmaterial 803 insbesondere Silikon, Polyurethan und/oder Acrylatharz aufweist. Somit wird der Schutz der Leiterbahn vor äußeren Einflüssen erhöht.

**Fig. 9** zeigt eine schematische Schnittdarstellung eines Kopplungsabschnitts 103 mit einer Nut 802. Im Kopplungsabschnitt 103 ist eine Steuerschaltung 901 zum Steuern eines Stroms in der Leiterbahn 104 angeordnet. Die Steuerschaltung 104 kann auch Teil der Auswerteeinheit 105 sein. Die Steuerschaltung 901 steuert insbesondere den elektrischen Energieeintrag in die Leiterbahn 104. Die Steuerschaltung 104 ist in dem Kopplungsabschnitt 103 integriert. Die Steuerschaltung 901 kann beispielsweise elektronische Bauteile, wie beispielsweise Relais oder Prozessoren aufweisen. Insbesondere kann die Steuerschaltung 901 auf der Oberfläche in der Nut 802 aufgedruckt werden. Die Steuerschaltung weist ferner ein Funkmodul 902 zum Senden von Signalen betreffend den Widerstand der Leiterbahn 104 zu einer beanstandeten Auswerteeinheit 105 auf. Das Funkmodul 902 ist insbesondere ausgebildet, die Signale drahtlos an eine Auswerteeinheit 105 zu übermitteln. Insbesondere kann das Funkmodul 902 ein Bluetooth Modul, ein Induktionsmodul oder ein RFID Modul ausbilden, um die Signale zu übertragen. Ferner kann auch in dem Koppelungsabschnitt 103 eine Energiequelle 903, wie beispielsweise eine Batterie, vorgesehen werden.

**Fig. 10** zeigt eine schematische Schnittdarstellung eines Kopplungsabschnitts 103 mit einer Nut 802, in welcher eine Auswerteeinheit 105 angeordnet ist. Die Auswerteeinheit 105 ist konfiguriert, Widerstandsänderungen der Leiterbahn zu messen. In dem Ausführungsbeispiel in Fig. 10 ist die Auswerteeinheit 105 in dem Kopplungsabschnitt 103 integriert. Die Auswerteeinheit 105 erhält die Signale der entsprechenden Widerstände der Leiterbahn 104 und bestimmt, ob sich die Abweichung des elektrischen Widerstands in der Leiterbahn 104 innerhalb der Grenzwerte befindet oder einen gewissen Grenzwert überschreitet. Die Auswerteeinheit 105 kann anschließend die ausgewerteten Daten betreffend die Widerstandsänderung der Leiterbahn 104 an eine Überwachungsvorrichtung weitergeben.

Die Auswerteeinheit 105 weist z. B. ein Signalelement 1001 auf, wobei das Signalelement 1001 konfiguriert ist, basierend auf einer festgestellten Widerstandsänderung ein Hinweissignal, insbesondere ein visuelles oder akustisches Hinweissignal, auszugeben. Das Signalelement 1001 kann beispielsweise ein tongebender Lautsprecher oder ein optisches Element, wie beispielsweise eine LED, darstellen, um den Zustand der Vorrichtung 100, 1100 wiederzugeben. Stellt die Auswerteeinheit 105 beispielsweise fest, dass bestimmte Grenzwerte der Widerstandsänderung der Leiterbahn 104 überschritten sind, so kann ein Alarmsignal als Hinweissignal akustisch ausgegeben werden. Ferner kann beispielsweise bei Vorliegen einer Widerstandsänderung der Leiterbahn 104 innerhalb der Grenzwerte eine LED grün aufleuchten. Wird ein Grenzwert der Widerstandänderung überschritten, so wird die Lichtfarbe angepasst, indem beispielsweise eine LED ein gelbes oder rotes Licht aufleuchtet.

Ferner ist an dem Befestigungskörper 101, insbesondere im Koppelungsabschnitt 102 eine Energiequelle 903, insbesondere eine Batterie, zum Einspeisen elektrischer Energie in die Leiterbahn, der Steuerschaltung 901 und der Auswerteeinheit 105, falls diese in dem Befestigungskörper 101 integriert ist, vorgesehen.

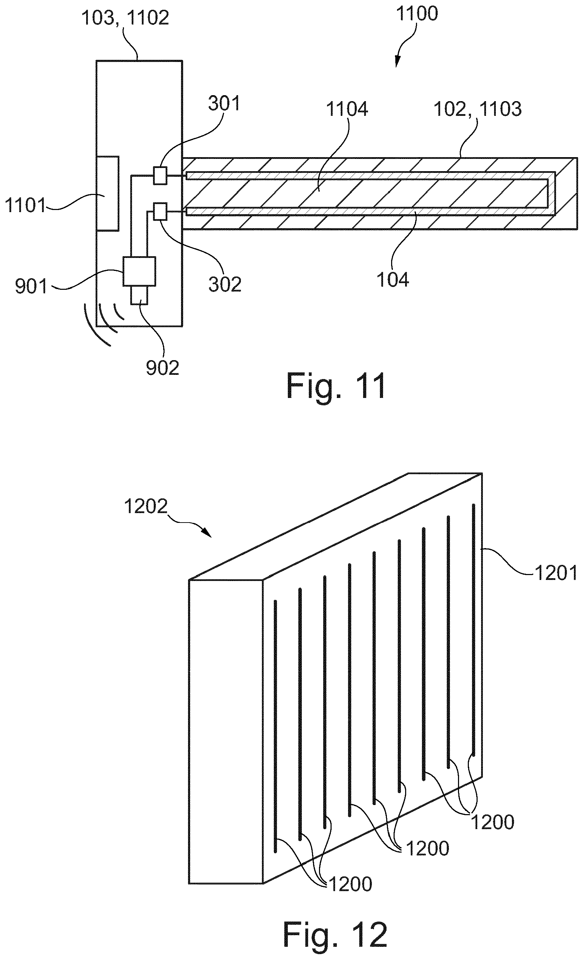

**Fig. 11** zeigt eine schematische Darstellung einer Vorrichtung als Schraubenelement bzw. Bolzenelement 1100.

Das Schraubenelement 1100 ist beispielsweise mittels einer Presspassung in das Stützelement 160 befestigt. Das Schraubenelement 1100 weist einen Schraubenkopf 1102 und einen Schaft 1103 auf. Der Schaft 1103 bildet den Befestigungsabschnitt 102 und der Schraubenkopf 1102 bildet den Koppelabschnitt 103 aus. Die Leiterbahn 104 verläuft zumindest entlang des Schaft 1103. Über eine leitende Verbindung werden in dem Kopplungsabschnitt 103 die entsprechenden Kontakte 301, 302 ausgebildet. Die Einspeisung elektrischer Energie in die Leiterbahn 104 wird über die Steuerschaltung 901 gesteuert. Über ein Funkmodul 902 können entsprechende Steuersignale drahtlos an die Steuerschaltung 901 übertragen werden. Ferner werden die Signale betreffend die Widerstandsmessung von dem Funkmodul 902 an eine zum Beispiel externe Auswerteeinheit 105 gesendet.

Ferner kann der Schraubenkopf 1102 eine Werkzeugaufnahme 1101 aufweisen, in welchen ein entsprechendes Werkzeug, wie beispielsweise ein Schraubenzieher, eingreifen kann. Gleichzeitig kann beispielsweise über die Werkzeugaufnahme 1101 elektrische Energie angekoppelt werden, um die Steuerschaltung 901 mit elektrischer Energie zu versorgen.

Ferner kann an dem Schraubenelement 1100 auf der Oberfläche des Befestigungsabschnitts 102 ein Gewinde 1104 vorgesehen werden. Entlang der Längserstreckung des Schraubenelements 1100 kann durch die Gewindegänge des Gewindes 1104 eine schmale Nut eingefräst werden, in welcher die Leiterbahn 104 vorliegt.

**Fig. 12** zeigt eine schematische Darstellung einer Vorrichtung als Bewehrungsstange 1200 gemäß einer beispielhaften Ausführungsform der vorliegenden Erfindung. Der Befestigungsabschnitt 102 der Bewehrungsstange 1200 stabilisiert das Stützelement, beispielsweise ein Betonelement 1201. Die Bewehrungsstange 1200 bildet eine Metallstange, die von Betonmaterial 1201 und gossen ist. In dieser Art wird Stahlbeton hergestellt, welcher bevorzugt bei Bauwerken Verwendung findet. Während der Lebenszeit des Bauwerks können die elektrischen Widerstände der erfindungsgemäßen Bewehrungsstangen 1200 ausgelesen werden, sodass darauf auf den bautechnischen Zustand des Stahlbetons geschlossen werden kann. Somit kann eine Echtzeit Überwachung des Zustands eines Bauwerks umgesetzt werden. Dabei können die Daten betreffend die elektrischen Widerstände der Bewehrungsstangen 1200 kontinuierlich oder in bestimmten Kontrollperioden abgelesen werden.

Die Bewehrungsstange 1200 weist entsprechend einen Befestigungsabschnitt auf, welcher von der Baumasse bzw. Betonmasse 1201 umschlossen wird. Die Leiterbahn ist dabei auf den Befestigungsabschnitt 1204 und/oder in einer Nut 802 bzw. einer Öffnung des Befestigungsabschnitts 102 aufgetragen. Ebenfalls kann der Kopplungsabschnitt 103 zum besseren Schutz im Inneren des Befestigungskörpers 101 der Bewehrungsstange 1200 ausgebildeten werden. Insbesondere weist das Schnittstellenelement im Kopplungsabschnitt 103 eine Induktionsschleife und/oder eine RFID Schnittstelle auf, um Energie für die Leiterbahn 104 induktiv von außen in den Kopplungsabschnitt 103 einzutragen.

Ergänzend ist darauf hinzuweisen, dass "umfassend" keine anderen Elemente oder Schritte ausschließt und "eine" oder "ein" keine Vielzahl ausschließt.

Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

**Bezugszeichenliste:**

| | | | |
|---|---|---|---|
| 100 | Vorrichtung, Gebirgsankervorrichtung | 1100 | Vorrichtung, Schraubenelement |
| | | 1101 | Werkzeugaufnahme |
| 101 | Befestigungskörper | 1102 | Schraubenkopf |
| 102 | Befestigungsabschnitt | 1103 | Schaft |
| 103 | Kopplungsabschnitt | | |
| 104 | Leiterbahnen | 1200 | Vorrichtung, |
| 105 | Auswerteeinheit | | Bewehrungsstange |
| 106 | Befestigungsplatte | 1201 | Formmasse, Beton |
| 150 | Gegenstand | 1202 | Gebäudewand |
| 151 | Mörtel | | |
| 160 | Stützelement | | |
| 301 | erste Kontakt | | |
| 302 | zweiter Kontakt | | |
| 501 | Substrat | | |
| 601 | Einschnürung | | |
| 701 | Schnittstellenelement | | |
| 801 | Isolierschicht | | |
| 802 | Nut | | |
| 803 | Versiegelungsmaterial | | |
| 901 | Steuerschaltung | | |
| 902 | Funkmodul | | |
| 903 | Energiequelle | | |
| 1001 | Signalelement | | |

## Patentansprüche

1. Vorrichtung (100, 1100, 1200) zum Befestigen eines Gegenstands (150) an einem Stützelement (160) und/oder zur Stabilisierung des Stützelements (160), wobei die Vorrichtung (100, 1100, 1200) eine Zustandsüberwachung zum Bestimmen einer Verformung aufweist, die Vorrichtung (100, 1100) aufweisend
einen Befestigungskörper (101) mit einem Befestigungsabschnitt (102) zum Einbringen in das Stützelement (160),
eine Leiterbahn (104), welche elektrisch leitfähig ist und entlang eines bahnförmigen Verlaufs zum Messen von mechanischer Spannung an dem Befestigungsabschnitt (102) aufgetragen ist,
wobei der Befestigungskörper (101) einen Kopplungsabschnitt (103) zum Koppeln mit einer Auswerteeinheit (105) aufweist,
wobei die Leiterbahn (104) derart ausgebildet ist, dass diese von dem Kopplungsabschnitt (103) aus mit elektrischer Energie versorgbar ist,
wobei der elektrische Widerstand der Leiterbahn (104) indikativ zu der Verformung des Befestigungskörpers (101) in dem Befestigungsabschnitt (102) ist,
wobei der bahnförmige Verlauf der Leiterbahn (104) derart in den Kopplungsabschnitt (103) hineinragt, dass eine elektrische Leitfähigkeit zwischen der Leiterbahn (104) in dem Kopplungsabschnitt (103) und dem Befestigungsabschnitt (102) vorliegt.

2. Vorrichtung (100, 1100, 1200) gemäß Anspruch 1,
wobei die Leiterbahn (104) ein Trägermaterial aufweist, in welchem leitfähige Partikel eingebettet sind.

3. Vorrichtung (100, 1100, 1200) gemäß Anspruch 1 oder 2,
wobei die Leiterbahn (104) in dem Kopplungsabschnitt (103) zumindest zwei elektrische Kontakte (301, 302) ausbildet,
wobei der bahnförmige Verlauf der Leiterbahn (104) von einem der elektrischen Kontakte (301) über den Befestigungsabschnitt (102) zu dem anderen elektrischen Kontakt (302) verläuft.

4. Vorrichtung (100, 1100, 1200) gemäß einem der Ansprüche 1 bis 3,
wobei der bahnförmige Verlauf der Leiterbahn (104) in dem Befestigungsabschnitt (102) zumindest teilweise mäanderförmig verläuft, und/oder
wobei die Breite des bahnförmigen Verlaufs insbesondere zwischen 20 µm und 2500 µm, insbesondere zwischen 25 µm und 2000 µm beträgt, und/oder
wobei zumindest zwei Bahnabschnitte des bahnförmigen Verlaufs unterschiedliche Bahnbreiten zueinander aufweisen, und/oder
wobei zwischen der Oberfläche des Befestigungsabschnitts (102) und der Leiterbahn (104) eine elektrisch isolierende Isolierschicht (801) angeordnet ist,
wobei die Isolierschicht (801) insbesondere ein polymeres Substrat, insbesondere eine Thermoplastfolie und/oder Elastomerfolie aufweist, und/oder
wobei die Leiterbahn (104) elastisch ausgebildet ist und die Leiterbahn (104) in einem gedehnten und vorgespannten Zustand auf dem Befestigungsabschnitt (102) aufgetragen ist.

5. Vorrichtung (100, 1100, 1200) gemäß einem der Ansprüche 1 bis 4,
wobei der Befestigungsabschnitt (102) eine Nut (802) aufweist, in welcher die Leiterbahn (104) angeordnet ist,
wobei insbesondere die Nut (802) mit Versiegelungsmaterial (803) gefüllt ist,
wobei das Versiegelungsmaterial (803) insbesondere Silikon, Polyurethan und/oder Acrylatharz aufweist.

6. Vorrichtung (100, 1100, 1200) gemäß einem der Ansprüche 1 bis 5,
wobei im Kopplungsabschnitt (103) eine Steuerschaltung (901) zum Steuern eines Stroms in der Leiterbahn (104) angeordnet ist,
wobei insbesondere die Steuerschaltung (901) in dem Kopplungsabschnitt (103) auf dessen Oberfläche aufgedruckt ist, und/oder
wobei die Steuerschaltung (901) ein Funkmodul (902) zum Senden von Signalen betreffend den Widerstand der Leiterbahn (104) zu einer beanstandeten Auswerteeinheit (105) aufweist.

7. Vorrichtung (100, 1100, 1200) gemäß Anspruch 6,
wobei der Befestigungskörper (101) im Kopplungsabschnitt (103) ein Schnittstellenelement (701) für eine Energiequelle (903) und/oder für eine Auswerteeinheit (105) aufweist,
wobei das Schnittstellenelement (701) insbesondere eine USB-Buchse, eine Induktionsschleife oder eine RFID Schnittstelle aufweist.

8. Vorrichtung (100, 1100, 1200) gemäß einem der Ansprüche 1 bis 7,
wobei in dem Koppelbereich eine Auswerteeinheit (105) angeordnet ist, welche konfiguriert ist, Widerstandsänderungen der Leiterbahn (104) zu messen,
wobei insbesondere die Auswerteeinheit (105) ein Signalelement (1001) aufweist,
wobei das Signalelement (1001) konfiguriert ist, basierend auf einer festgestellten Widerstandsänderung ein Hinweissignal, insbesondere ein visuelles oder akustisches Hinweissignal, auszugeben.

9. Vorrichtung (100, 1100, 1200) gemäß einem der Ansprüche 1 bis 8,
wobei der Befestigungskörper (101) eine Energiequelle (903), insbesondere eine Batterie, zum Einspeisen elektrischer Energie in die Leiterbahn (104) aufweist, und/oder
wobei der Befestigungskörper (101) zumindest teilweise mit einer Schutzschicht, insbesondere bestehend aus einem Verkapselungsmaterial oder einem Schutzlack, eingekapselt ist, und/oder
wobei der Befestigungskörper (101) als Gebirgsanker derart ausgebildet ist, dass mittels des Befestigungsabschnitts (102) der Gegenstand (150), insbesondere ein Tübbing, an dem Stützelement (160), insbesondere einer Gebirgswand oder Stützwand, befestigbar ist, oder
wobei der Befestigungskörper (101) als Stützanker derart ausgebildet ist, dass der Befestigungsabschnitt (102) zum Stabilisieren des Stützelements (160), insbesondere einer Gebirgswand oder Stützwand, in diesem eingebracht ist.

10. Vorrichtung (100, 1100, 1200) gemäß einem der Ansprüche 1 bis 9,
wobei der Befestigungskörper (101) als Bewehrungsstange derart ausgebildet ist, dass mittels des Befestigungsabschnitts (102) das Stützelement, insbesondere ein Betonelement, stabilisierbar ist, und/oder
wobei der Befestigungskörper (101) als Schraubelement, Bolzenelement oder Dübelelement derart ausgebildet ist, dass mittels des Befestigungsabschnitts (102) der Gegenstand (150), an dem Stützelement (160), insbesondere einer Gebäudewand, befestigbar ist.

11. Verfahren zum Bestimmen einer Verformung einer Vorrichtung (100, 1100, 1200) gemäß einem der Ansprüche 1 bis 10 zum Befestigen eines Gegenstands (150) an einem Stützelement (160), wobei das Verfahren aufweist
Messen eines elektrischen Widerstands der Leiterbahn (104), wobei der elektrische Widerstand indikativ zu der Verformung des Befestigungskörpers (101) in dem Befestigungsabschnitt (102) ist.

12. Verfahren zum Herstellen einer Vorrichtung (100, 1100, 1200) zum Befestigen eines Gegenstands (150) an einem Stützelement (160) und/oder zur Stabilisierung des Stützelements (160), wobei die Vorrichtung (100, 1100, 1200) aufweist
Bereitstellen eines einen Befestigungskörper (101) mit einem Befestigungsabschnitt (102) zum Einbringen in das Stützelement (160),
Auftragen einer elektrisch leitfähigen Leiterbahn (104) entlang eines bahnförmigen Verlaufs zum Messen von mechanischer Spannung an dem Befestigungsabschnitt (102),
wobei der Befestigungskörper (101) einen Kopplungsabschnitt (103) zum Koppeln mit einer Auswerteeinheit (105) aufweist,
wobei die Leiterbahn (104) derart ausgebildet ist, dass diese von dem Kopplungsabschnitt (103) aus mit elektrischer Energie versorgbar ist,
wobei der elektrische Widerstand der Leiterbahn (104) indikativ zu der Verformung des Befestigungskörpers (101) in dem Befestigungsabschnitt (102) ist,
wobei der bahnförmige Verlauf der Leiterbahn (104) derart in den Kopplungsabschnitt (103) hineinragt, dass eine elektrische Leitfähigkeit zwischen der Leiterbahn (104) in dem Kopplungsabschnitt (103) und dem Befestigungsabschnitt (102) vorliegt.

13. Verfahren gemäß Anspruch 12,
wobei die Leiterbahn (104) hergestellt wird aus elektrisch leitfähiger Tinte aufweisend ein Trägermaterial, welches gelöste leitfähige Partikel aufweist,
wobei die elektrisch leitfähige Tinte im flüssigen Zustand auf den Befestigungsabschnitt (103) aufgetragen wird, und
wobei das aufgetragene Trägermaterial verfestigt wird, so dass die Anordnung der leitfähigen Partikel in dem Trägermaterial fixiert wird.
wobei die leitfähige Tinte insbesondere mittels Siebdruckverfahrens, Tiefdruckverfahrens oder mittels Tintenstrahldruckverfahrens auf den Befestigungsabschnitt (102) aufgetragen wird.

14. Verfahren gemäß Anspruch 12,
wobei die Leiterbahn (104) in einem Substrat (501) vorliegt,
wobei das Auftragen einer Leiterbahn (104) entlang des bahnförmigen Verlaufs aufweist ein Aufkleben des Substrats (501) auf dem Befestigungsabschnitt (102).

15. Verfahren gemäß einem der Ansprüche 12 bis 14,
wobei die Leiterbahn (104) elastisch ausgebildet ist,
wobei das Verfahren aufweist,
Dehnen der Leiterbahn (104) in einen vorgespannten Zustand vor dem Auftragen der Leiterbahn (104).

## Claims

1. A device (100, 1100, 1200) for attaching an object (150) to a support element (160) and/or for stabilizing the support element (160), wherein the device (100, 1100, 1200) comprises a condition monitoring for determining a deformation, the device (100, 1100) comprising:
an attachment body (101) having an attachment portion (102) for insertion into the support element (160),
a conductor trace (104) which is electrically conductive and applied along a trace-shaped path for measuring a mechanical tension at the attachment portion (102),
wherein the attachment body (101) comprises a coupling portion (103) for coupling with an evaluation unit (105),
wherein the conductor trace (104) is designed such that it is suppliable with electrical energy from the coupling portion (103),
wherein the electrical resistance of the conductor trace (104) is indicative for the deformation of the attachment body (101) in the attachment portion (102),
wherein the trace-shaped path of the conductor trace (104) protrudes in the coupling portion (103) such that an electrical conductivity is present between the conductor trace (104) in the coupling portion (103) and the attachment portion (102).

2. The device (100, 1100, 1200) according to claim 1,
wherein the conductor trace (104) comprises a carrier material in which conductive particles are embedded.

3. The device (100, 1100, 1200) according to claim 1 or 2,
wherein the conductor trace (104) forms at least two electrical contacts (301, 302) in the coupling portion (103),
wherein the trace-shaped path of the conductor trace (104) extends from one of the electrical contacts (301) via the attachment portion (102) to the other electrical contact (302).

4. The device (100, 1100, 1200) according to any one of the claims 1 to 3,
wherein the trace-shaped path of the conductor trace (104) in the attachment portion (102) is at least partially meander-shaped, and/or
wherein the width of the trace-shaped path is in particular between 20 µm and 2500 µm, in particular between 25 µm and 2000 µm, and/or
wherein at least two trace portions of the trace-shaped path comprise different trace widths with respect to each other, and/or
wherein between the surface of the attachment portion (102) and the conductor trace (104) an electrically insulating insulating layer (801) is arranged, wherein the insulating layer (801) in particular comprises a polymeric substrate, in particular a thermoplastic film and/or elastomer film, and/or
wherein the conductor trace (104) is elastically formed and the conductor trace (104) is applied to the attachment portion (102) in a stretched and biased state.

5. The device (100, 1100, 1200) according to any one of the claims 1 to 4,
wherein the attachment portion (102) comprises a groove (802) in which the conductor trace (104) is arranged,
wherein in particular the groove (802) is filled with a sealing material (803),
wherein the sealing material (803) in particular comprises silicone, polyurethane and/or acrylic resin.

6. The device (100, 1100, 1200) according to any one of the claims 1 to 5,
wherein a control circuit (901) for controlling a current in the conductor trace (104) is arranged in the coupling portion (103),
wherein in particular the control circuit (901) in the coupling portion (103) is printed on the surface of the coupling portion (103), and/or
wherein the control circuit (901) comprises a radio module (902) for transmitting signals concerning the resistance of the conductor trace (104) to an evaluation unit (105) which is spaced apart.

7. The device (100, 1100, 1200) according to claim 6,
wherein the attachment body (101) in the coupling portion (103) comprises an interface element (701) for an energy source (903) and/or for an evaluation unit (105),
wherein the interface element (701) in particular comprises a USB port, an induction loop, or an RFID interface.

8. The device (100, 1100, 1200) according to any one of the claims 1 to 7, wherein an evaluation unit (105) which is configured to measure changes in resistance of the conductor trace (104) is arranged in the coupling region, wherein in particular the evaluation unit (105) comprises a signal element (1001), wherein the signal element (1001) is configured to output an indication signal, in particular a visual or acoustic indication signal, based on a detected change in resistance.

9. The device (100, 1100, 1200) according to any one of the claims 1 to 8,
wherein the attachment body (101) comprises an energy source (903), in particular a battery, for supplying electrical energy in the conductor trace (104), and/or
wherein the attachment body (101) is at least partially encapsulated by a protective layer, in particular consisting of an encapsulating material or a protective lacquer, and/or
wherein the attachment body (101) is designed as a rock anchor, such that the object (150), in particular a tubbing, is attachable to the support element (160), in particular a mountain wall or a support wall, by the attachment portion (102), or
wherein the attachment body (101) is designed as a supporting anchor, such that the attachment portion (102) for stabilizing the support element (160), in particular a mountain wall or a support wall, is inserted in the support element (160).

10. The device (100, 1100, 1200) according to any one of the claims 1 to 9,
wherein the attachment body (101) is designed as a reinforcing rod, such that the support element, in particular a concrete element, is stabilizable by the attachment portion (102), and/or
wherein the attachment body (101) is designed as a screwing element, a bolt element, or a dowel element, such that the object (150) is attachable to the support element (160), in particular a building wall, by means of the attachment portion (102).

11. A method for determining a deformation of a device (100, 1100, 1200) according to any one of the claims 1 to 10 for attaching an object (150) to a support element (160), wherein the method comprises:
measuring an electrical resistance of the conductor trace (104), wherein the electrical resistance is indicative for the deformation of the attachment body (101) in the attachment portion (102).

12. A method for manufacturing a device (100, 1100, 1200) for attaching an object (150) to a support element (160) and/or for stabilizing the support element (160), wherein the device (100, 1100, 1200) comprises:
providing an attachment body (101) having an attachment portion (102) for insertion into the support element (160),
applying an electrically conductive conductor trace (104) along a trace-shaped path for measuring a mechanical tension at the attachment portion (102),
wherein the attachment body (101) comprises a coupling portion (103) for coupling with an evaluation unit (105),
wherein the conductor trace (104) is designed such that it is suppliable with electrical energy from the coupling portion (103),
wherein the electrical resistance of the conductor trace (104) is indicative for the deformation of the attachment body (101) in the attachment portion (102),
wherein the trace-shaped path of the conductor trace (104) protrudes in the coupling portion (103) such that an electrical conductivity is present between the conductor trace (104) in the coupling portion (103) and the attachment portion (102).

13. The method according to claim 12,
wherein the conductor trace (104) is manufactured from an electrically conductive ink comprising a carrier material which comprises dissolved conductive particles,
wherein the electrically conductive ink is applied onto the attachment portion (103) in a liquid state, and
wherein the applied carrier material is solidified, so that the arrangement of the conductive particles is fixed in the carrier material,
wherein the conductive ink is in particular applied onto the attachment portion (102) by a screen printing method, a gravure printing method, or by an ink jet printing method.

14. The method according to claim 12,
wherein the conductor trace (104) is present in a substrate (501),
wherein applying a conductor trace (104) along the trace-shaped path comprises adhering the substrate (501) on the attachment portion (102).

15. The method according to any one of the claims 12 to 14,
wherein the conductor trace (104) is formed elastically,
wherein the method comprises:
stretching the conductor trace (104) in a biased state prior to applying the conductor trace (104).

## Revendications

1. Dispositif (100, 1100, 1200) pour fixer un article (150) à un élément de support (160) et/ou pour stabiliser l'élément de support (160), dans lequel le dispositif (100, 1100, 1200) présente une surveillance d'état pour déterminer une déformation, le dispositif (100, 1100) présentant
un corps de fixation (101) comprenant une section de fixation (102) destinée à être insérée dans l'élément de support (160),
une piste conductrice (104) qui est électriquement conductrice et qui est appliquée le long d'un trajet en forme de bande pour mesurer la tension mécanique au niveau de la section de fixation (102),
dans lequel le corps de fixation (101) présente une section de couplage (103) pour un couplage avec une unité d'évaluation (105),
dans lequel la piste conductrice (104) est conçue de telle sorte que celle-ci peut être alimentée en énergie électrique à partir de la section de couplage (103),
dans lequel la résistance électrique de la piste conductrice (104) indique la déformation du corps de fixation (101) dans la section de fixation (102),
dans lequel le trajet en forme de bande de la piste conductrice (104) fait saillie dans la section de couplage (103) de telle sorte qu'il existe une conductivité électrique entre la piste conductrice (104) dans la section de couplage (103) et la section de fixation (102).

2. Dispositif (100, 1100, 1200) selon la revendication 1,
dans lequel la piste conductrice (104) présente un matériau de support dans lequel des particules conductrices sont incorporées.

3. Dispositif (100, 1100, 1200) selon la revendication 1 ou 2,
dans lequel la piste conductrice (104) forme dans la section de couplage (103) au moins deux contacts électriques (301, 302),
dans lequel le trajet en forme de bande de la piste conductrice (104) s'étend de l'un des contacts électriques (301) à l'autre contact électrique (302) via la section de fixation (102).

4. Dispositif (100, 1100, 1200) selon l'une quelconque des revendications 1 à 3,
dans lequel le trajet en forme de bande de la piste conductrice (104) dans la section de fixation (102) s'étend au moins partiellement en forme de méandres, et/ou
dans lequel la largeur du trajet en forme de bande est en particulier comprise entre 20 µm et 2500 µm, en particulier entre 25 µm et 2000 um, et/ou
dans lequel au moins deux sections de piste du trajet en forme de bande présentent des largeurs de piste différentes l'une de l'autre, et/ou
dans lequel une couche isolante électriquement isolante (801) est agencée entre la surface de la section de fixation (102) et la piste conductrice (104), dans lequel la couche isolante (801) présente en particulier un substrat polymère, en particulier une feuille thermoplastique et/ou une feuille élastomère, et/ou
dans lequel la piste conductrice (104) est conçue élastique et la piste conductrice (104) est appliquée sur la section de fixation (102) dans un état étiré et précontraint.

5. Dispositif (100, 1100, 1200) selon l'une quelconque des revendications 1 à 4, dans lequel la section de fixation (102) présente une rainure (802) dans laquelle est agencée la piste conductrice (104).
dans lequel en particulier la rainure (802) est remplie de matériau de scellement (803), dans lequel le matériau de scellement (803) présente en particulier de la silicone, du polyuréthane et/ou de la résine acrylique.

6. Dispositif (100, 1100, 1200) selon l'une quelconque des revendications 1 à 5, dans lequel un circuit de commande (901) est agencé dans la section de couplage (103) pour commander un courant dans la piste conductrice (104),
dans lequel en particulier le circuit de commande (901) est imprimé dans la section de couplage (103) sur sa surface, et/ou
dans lequel le circuit de commande (901) présente un module radio (902) pour l'émission de signaux concernant la résistance de la piste conductrice (104) vers une unité d'évaluation (105) à distance.

7. Dispositif (100, 1100, 1200) selon la revendication 6,
dans lequel le corps de fixation (101) présente dans la section de couplage (103) un élément d'interface (701) pour une source d'énergie (903) et/ou pour une unité d'évaluation (105),
dans lequel l'élément d'interface (701) présente en particulier une prise USB, une boucle d'induction ou une interface RFID.

8. Dispositif (100, 1100, 1200) selon l'une quelconque des revendications 1 à 7, dans lequel une unité d'évaluation (105) est agencée dans la zone de couplage, qui est configurée pour mesurer des variations de résistance de la piste conductrice (104),
dans lequel en particulier l'unité d'évaluation (105) présente un élément de signal (1001),
dans lequel l'élément de signal (1001) est configuré, sur la base d'une variation de résistance détectée, pour émettre un signal d'indication, en particulier un signal d'indication visuel ou acoustique.

9. Dispositif (100, 1100, 1200) selon l'une quelconque des revendications 1 à 8,
dans lequel le corps de fixation (101) présente une source d'énergie (903), en particulier une batterie, pour l'alimentation en énergie électrique dans la piste conductrice (104), et/ou
dans lequel le corps de fixation (101) est au moins partiellement encapsulé avec une couche de protection, en particulier composée d'un matériau d'encapsulation ou d'un vernis de protection, et/ou
dans lequel le corps de fixation (101) est conçu sous la forme d'un boulon à roche de telle sorte qu'au moyen de la section de fixation (102), l'objet (150), en particulier un cuvelage, peut être fixé à l'élément de support (160), en particulier à une paroi de roche ou à une paroi de support, ou
dans lequel le corps de fixation (101) est réalisé sous la forme d'un ancrage de support de telle sorte que la section de fixation (102) est insérée dans l'élément de support(160), en particulier une paroi de roche ou une paroi de support, pour stabiliser l'élément de support.

10. Dispositif (100, 1100, 1200) selon l'une quelconque des revendications 1 à 9,
dans lequel le corps de fixation (101) est conçu sous la forme d'une barre d'armature de telle sorte qu'au moyen de la section de fixation (102), l'élément de support, en particulier un élément en béton, peut être stabilisé, et/ou
dans lequel le corps de fixation (101) est réalisé sous la forme d'un élément de vis, d'un élément de boulon ou d'un élément de cheville de telle sorte qu'au moyen de la section de fixation (102), l'article (150) peut être fixé à l'élément de support (160), en particulier à une paroi de bâtiment.

11. Procédé de détermination de la déformation d'un dispositif (100, 1100, 1200) selon l'une quelconque des revendications 1 à 10, pour fixer un article (150) à un élément de support (160), le procédé comprenant l'étape consistant à :
mesurer une résistance électrique de la piste conductrice (104), dans lequel la résistance électrique indique la déformation du corps de fixation (101) dans la section de fixation (102).

12. Procédé de fabrication d'un dispositif (100, 1100, 1200) pour fixer un article (150) sur un élément de support (160) et/ou pour stabiliser l'élément de support (160), le dispositif (100, 1100, 1200) présentant :
la fourniture d'un corps de fixation (101) comprenant une section de fixation (102) destinée à être insérée dans l'élément de support (160),
l'application d'une piste conductrice électriquement conductrice (104) le long d'un trajet en forme de bande pour mesurer la tension mécanique sur la section de fixation (102),
dans lequel le corps de fixation (101) présente une section de couplage (103) pour un couplage avec une unité d'évaluation (105),
dans lequel la piste conductrice (104) est conçue de telle sorte que celle-ci peut être alimentée en énergie électrique à partir de la section de couplage (103), dans lequel la résistance électrique de la piste conductrice (104) indique la déformation du corps de fixation (101) dans la section de fixation (102),
dans lequel le trajet en forme de bande de la piste conductrice (104) fait saillie dans la section de couplage (103) de telle sorte qu'il existe une conductivité électrique entre la piste conductrice (104) dans la section de couplage (103) et la section de fixation (102).

13. Procédé selon la revendication 12,
dans lequel la piste conductrice (104) est fabriquée à partir d'une encre électriquement conductrice comprenant un matériau de support qui présente des particules conductrices dissoutes,
dans lequel l'encre électriquement conductrice est appliquée à l'état liquide sur la section de fixation (103), et
dans lequel le matériau de support appliqué est solidifié de telle sorte que l'agencement des particules conductrices dans le matériau de support est fixée,
dans lequel l'encre conductrice est appliquée sur la section de fixation (102), en particulier au moyen d'un procédé de sérigraphie, d'un procédé d'héliogravure ou d'un procédé d'impression par jet d'encre.

14. Procédé selon la revendication 12,
dans lequel la piste conductrice (104) est présente dans un substrat (501),
dans lequel l'application d'une piste conductrice (104) le long du trajet en forme de bande présente un collage du substrat (501) sur la section de fixation (102).

15. Procédé selon l'une quelconque des revendications 12 à 14,
dans lequel la piste conductrice (104) est élastique,
dans lequel le procédé présente l'étape consistant à, étirer la piste conductrice (104) dans un état précontraint avant l'application de la piste conductrice (104).
